# EUROPEAN PATENT APPLICATION

(11) **EP 4 387 357 A1**
(43) Date of publication of application: **19.06.2024**
(21) Application number: 22860298.3
(22) Date of filing: 15.08.2022
(51) Int. Cl.: H04W 72/04

(54) **COMMUNICATION METHOD AND DEVICE**

(30) Priority: 25.08.2021 CN 202110982168; 30.09.2021 CN 202111165700
(71) Applicant: Huawei Technologies Co., Ltd., Shenzhen, Guangdong 518129 (CN)
(72) Inventor: LIU, Yun, Shenzhen, Guangdong 518129 (CN); XUE, Lixia, Shenzhen, Guangdong 518129 (CN)
(74) Representative: Maiwald GmbH
(86) International application number: PCT/CN2022/112543
(87) International publication number: WO 2023/024952

(57) **Abstract**

This application relates to a communication method and device, and is applicable to a 5G system, an Internet of Vehicles system, or a D2D system. A first terminal device determines first information, where the first information indicates a reference frequency domain position of a first resource pool, the first resource pool is a resource pool configured for a first-type terminal device, and the reference frequency domain position includes one or more of a start frequency domain position, an end frequency domain position, or an intermediate frequency domain position of the first resource pool; and the first terminal device determines a frequency domain range of the first resource pool based on the reference frequency domain position and second information, where the second information includes one or more of the following: a bandwidth supported by the first-type terminal device, a bandwidth of one subchannel, or a quantity of subchannels occupied by the first resource pool. In embodiments of this application, the first resource pool may be configured for the first terminal device based on the first information. In this way, a problem of configuring a resource pool for a terminal device is resolved.

## Description

### CROSS-REFERENCE TO RELATED APPLICATIONS

This application claims priority to Chinese Patent Application No. 202110982168.7, filed with the China National Intellectual Property Administration on August 25, 2021, and entitled "COMMUNICATION METHOD, TERMINAL, AND NETWORK DEVICE", which is incorporated herein by reference in its entirety; and this application claims priority to Chinese

Patent Application No. 202111165700.2, filed with the China National Intellectual Property Administration on September 30, 2021, and entitled "COMMUNICATION METHOD AND DEVICE", which is incorporated herein by reference in its entirety.

### TECHNICAL FIELD

This application relates to the field of communication technologies, and in particular, to a communication method and device.

### BACKGROUND

Currently, in sidelink communication, a concept of a mixed resource pool (mixed resource pool) is introduced, to support different types of UEs in performing transmission in one resource pool. To avoid mutual interference between the various types of UEs in the resource pool, it may be considered that subpools (subpools) are separately allocated to the different types of UEs in the resource pool. In this way, the UEs can separately perform communication in the subpools. This reduces interference between the UEs.

Currently, how to configure the subpools for the UEs is not discussed. If the subpools are configured for the UEs in a current configuration manner of the resource pool, configuration information includes a large amount of content, and signaling overheads are large.

### SUMMARY

Embodiments of this application provide a communication method and device, to reduce signaling overheads when a resource pool is configured for a UE.

According to a first aspect, a first communication method is provided. The method may be performed by a terminal device, may be performed by a larger device including a terminal device, or may be performed by a chip system or another functional module. The chip system or the functional module can implement a function of the terminal device. The chip system or the functional module is, for example, disposed in the terminal device. The terminal device is, for example, referred to as a first terminal device. The first terminal device is, for example, a first-type terminal device. The method includes: determining first information, where the first information indicates a reference frequency domain position of a first resource pool, the first resource pool is a resource pool configured for the first-type terminal device, and the reference frequency domain position includes one or more of a start frequency domain position, an end frequency domain position, or an intermediate frequency domain position of the first resource pool; and determining a frequency domain range of the first resource pool based on the reference frequency domain position and second information, where the second information includes one or more of a bandwidth supported by the first-type terminal device, a bandwidth of one subchannel, or a quantity of subchannels occupied by the first resource pool. The first resource pool is the resource pool configured for the first-type terminal device. The first-type terminal device may work in the first resource pool. That the first-type terminal device works in the first resource pool may be understood as that the first-type terminal device may monitor a physical sidelink control channel (physical sidelink control channel, PSCCH) in the first resource pool, may receive the PSCCH in the first resource pool, and may also select a resource in the first resource pool to send information.

In embodiments of this application, the first resource pool may be configured for the first terminal device based on the first information. The first resource pool is, for example, a subpool (which may also be referred to as a first subpool) in a mixed resource pool, or the first resource pool may not be a subpool, but an independent resource pool. In this way, a problem of configuring a resource pool or a subpool for the terminal device is resolved. In addition, the first information may configure the reference frequency domain position of the first resource pool. The first terminal device can determine the frequency domain position of the first resource pool based on the reference frequency domain position and the second information. In other words, the first information does not need to include excessive content. For example, the first information is sent by a network device. Because the first information includes less content, transmission overheads can be reduced.

With reference to the first aspect, in a first optional implementation of the first aspect, the reference frequency domain position is a frequency domain position of a subchannel on which a sidelink synchronization signal is located; the reference frequency domain position is a frequency domain position of a lowest-frequency subcarrier on which a sidelink synchronization signal is located; the reference frequency domain position is a frequency domain position of a highest-frequency subcarrier on which a sidelink synchronization signal is located; or the reference frequency domain position is a frequency domain position of a first subcarrier occupied by a sidelink synchronization signal. There may be a plurality of reference frequency domain positions. For example, the reference frequency domain position is related to the sidelink synchronization signal, so that the first resource pool can be better positioned.

With reference to the first optional implementation of the first aspect, in a second optional implementation of the first aspect, the first subcarrier is a 66^{th} or 67^{th} subcarrier. The first subcarrier is, for example, a subcarrier that is located in the middle of subcarriers occupied by the sidelink synchronization signal in frequency domain. For example, if the sidelink synchronization signal occupies 132 subcarriers, the first subcarrier is, for example, the 66^{th} or 67^{th} subcarrier. If the quantity of subcarriers occupied by the sidelink synchronization signal changes, the first subcarrier may also accordingly change.

With reference to the first aspect, the first optional implementation of the first aspect, or the second optional implementation of the first aspect, in a third optional implementation of the first aspect, the frequency domain range of the first resource pool includes a frequency domain position of the sidelink synchronization signal. In a sidelink communication scenario, the sidelink synchronization signal is sent by the terminal device, and the frequency domain position of the sidelink synchronization signal is fixed. All types of terminal devices need to monitor the sidelink synchronization signal. Otherwise, the terminal devices may fail to synchronize to a synchronization source with a highest priority. If the resource pool allocated to the terminal device does not include the frequency domain position of the sidelink synchronization signal, the terminal device further needs to switch to the frequency domain position of the sidelink synchronization signal to monitor the sidelink synchronization signal. For the terminal device, implementation is complex, and power consumption is high. In view of this, it is proposed in embodiments of this application that the frequency domain range of the first resource pool allocated to the first terminal device may include a frequency domain range of the sidelink synchronization signal (in other words, may include the frequency domain position of the sidelink synchronization signal). In this way, the first terminal device can monitor the sidelink synchronization signal without switching a working frequency. This simplifies a working process of the terminal device, and can reduce power consumption.

With reference to any one of the first aspect, or the first optional implementation of the first aspect to the third optional implementation of the first aspect, in a fourth optional implementation of the first aspect, a bandwidth of the first resource pool is less than or equal to the bandwidth supported by the first-type terminal device. To enable a first UE to support the first resource pool, the bandwidth of the first resource pool may be less than or equal to a bandwidth of the first UE, so that the first UE may transmit data on a resource included in the first resource pool.

With reference to any one of the first aspect, or the first optional implementation of the first aspect to the fourth optional implementation of the first aspect, in a fifth optional implementation of the first aspect, the method further includes: sending a first request message to the network device, where the first request message is used to request a resource, the resource is used to send data to a second terminal device, the first request message includes second indication information, and the second indication information indicates that the first terminal device or the second terminal device or both are a first-type terminal device, indicates a band supported by the first terminal device and/or the second terminal device, or indicates a bandwidth supported by the first terminal device and/or the second terminal device, or the second indication information includes an identifier or an index of the second terminal device; and receiving a first response message from the network device, where the first response message indicates a first resource. The network device can learn of capabilities of terminal devices of both communication parties based on the second indication information, and the network device can consider a capability of the first terminal device and/or a capability of the second terminal device when allocating a resource to the first terminal device, so that a resource that can be supported by both the first terminal device and the second terminal device is allocated to the first terminal device, and a success rate of communication between the terminal devices is increased.

With reference to any one of the first aspect, or the first optional implementation of the first aspect to the fourth optional implementation of the first aspect, in a sixth optional implementation of the first aspect, the method further includes: receiving a first message from a second terminal device, where the first message is used to reserve a first resource; if the first message does not include third indication information, lowering a priority indicated by the first message, where the third indication information indicates that a transmit end of the third indication information is a first-type terminal device; determining that a priority of first data is higher than the lowered priority, or determining that the lowered priority meets a second threshold, where the first data is to-be-sent data; and sending a second message in the first resource pool, where the second message is used to reserve the first resource. The priority indicated by the first message is lowered, so that it can be ensured to a great extent that the first-type terminal device uses the resource in the first resource pool. However, if the priority indicated by the first message is still lower than the priority of the first data or still does not meet the threshold after being lowered, a non-first-type terminal device may preempt the resource in the first resource pool, so that sending of data with a higher priority can be ensured to a great extent. In addition, the non-first-type terminal device also sends a preemption message in the first resource pool, so that the first-type terminal device can monitor the preemption message. This reduces resource collision.

According to a second aspect, a second communication method is provided. The method may be performed by a terminal device, may be performed by a larger device including a terminal device, or may be performed by a chip system or another functional module. The chip system or the functional module can implement a function of the terminal device. The chip system or the functional module is, for example, disposed in the terminal device. The terminal device is, for example, referred to as a first terminal device. The method includes: sending M messages, where resources reserved by using N messages in the M messages are located in a first resource pool, a frequency domain position of at least one message in the N messages is located in the first resource pool, both M and N are positive integers, and N is less than or equal to M. According to embodiments of this application, a message for reserving a resource in the first resource pool is sent in the first resource pool, so that a first-type UE can monitor the message. This reduces a probability of resource collision, and can also ensure effectiveness of a reservation mechanism to a great extent.

According to a third aspect, a third communication method is provided. The method may be performed by a terminal device, may be performed by a larger device including a terminal device, or may be performed by a chip system or another functional module. The chip system or the functional module can implement a function of the terminal device. The chip system or the functional module is, for example, disposed in the terminal device. The terminal device is, for example, referred to as a first terminal device. The method includes: sending a message, where the message is used to reserve a resource, a frequency domain position of the message is located outside a first resource pool, the resource reserved by using the message does not include a resource in the first resource pool, and the first resource pool is a resource pool used by a first-type terminal device. If the message for reserving the resource is sent outside the first resource pool, the message cannot be used to reserve the resource in the first resource pool. This reduces a probability of resource collision.

According to a fourth aspect, a fourth communication method is provided. The method may be performed by a terminal device, may be performed by a larger device including a terminal device, or may be performed by a chip system or another functional module. The chip system or the functional module can implement a function of the terminal device. The chip system or the functional module is, for example, disposed in the terminal device. The terminal device is, for example, referred to as a first terminal device. The method includes: receiving a first message from a second terminal device, where the first message is used to reserve a first resource, the first message includes third indication information, and the third indication information indicates that the second terminal device is a first-type terminal device; raising a priority indicated by the first message; determining that a priority of first data is higher than the raised priority, or determining that the raised priority meets a first threshold, where the first data is data to be sent on the first resource reserved by using a second message; and sending the second message in a first resource pool, where the second message is used to reserve the first resource, and the first resource pool is a resource pool used by the first-type terminal device. The priority indicated by the first message is raised, so that it can be ensured to a great extent that the first-type terminal device uses a resource in the first resource pool. However, if the priority indicated by the first message is still lower than the priority of the first data or still does not meet the threshold after being raised, a non-first-type terminal device may preempt the resource in the first resource pool, so that sending of data with a higher priority can be ensured to a great extent. In addition, the non-first-type terminal device also sends a preemption message in the first resource pool, so that the first-type terminal device can monitor the preemption message. This reduces resource collision.

According to a fifth aspect, a fifth communication method is provided. The method may be performed by a terminal device, may be performed by a larger device including a terminal device, or may be performed by a chip system or another functional module. The chip system or the functional module can implement a function of the terminal device. The chip system or the functional module is, for example, disposed in the terminal device. The terminal device is, for example, referred to as a first terminal device. The method includes: lowering a priority of first data; and sending a message, where the message is used to reserve a resource for the first data, a frequency domain position of the resource is located in a first resource pool, the first terminal device is a second-type terminal device, and the first resource pool is a resource pool used by a first-type terminal device. If a non-first-type terminal device needs to reserve a resource in the first resource pool, a priority of data to be sent by the terminal device may be lowered, so that on the premise of ensuring to a great extent that the resource in the first resource pool is available to the first-type terminal device, resource utilization in a first subpool is increased. In addition, the message for reserving the resource is sent in the first resource pool, so that collision can also be reduced, and effectiveness of a reservation mechanism can be ensured.

According to a sixth aspect, a sixth communication method is provided. The method may be performed by a terminal device, may be performed by a larger device including a terminal device, or may be performed by a chip system or another functional module. The chip system or the functional module can implement a function of the terminal device. The chip system or the functional module is, for example, disposed in the terminal device. The terminal device is, for example, referred to as a first terminal device. The method includes: sending a first message, where the first message is used to reserve a first resource, a frequency domain position of the first resource is located in a first resource pool, the first terminal device is a second-type terminal device, and the first resource pool is a resource pool used by a first-type terminal device; receiving a second message from a second terminal device, where the second message is used to reserve a second resource, the second message includes third indication information, and the third indication information indicates that the second terminal device is the first-type terminal device; and if the first resource and the second resource have an intersection, skipping sending data on an intersection resource of the first resource and the second resource, or skipping sending data on the first resource. According to the solutions provided in embodiments of this application, it can be ensured to a great extent that a first-type UE uses a resource in a first subpool, resource collision can be reduced, and effectiveness of a reservation mechanism can be improved.

According to a seventh aspect, a communication apparatus is provided. The communication apparatus may be the first terminal device according to any one of the first aspect to the sixth aspect. The communication apparatus has a function of the foregoing first terminal device. The communication apparatus is, for example, the first terminal device, or a functional module in the first terminal device, for example, a baseband apparatus or a chip system. In an optional implementation, the communication apparatus includes the baseband apparatus and a radio frequency apparatus. In another optional implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional module, and the functional module is referred to as the transceiver unit. The functional module can implement the sending function and the receiving function. Alternatively, the sending unit and the receiving unit may be different functional modules, and the transceiver unit is a general term for these functional modules.

In an optional implementation, the communication apparatus further includes a storage unit. The processing unit is configured to: be coupled to the storage unit, and execute a program or instructions in the storage unit, to enable the communication apparatus to perform a function of the first terminal device according to any one of the first aspect to the sixth aspect.

According to an eighth aspect, a computer-readable storage medium is provided. The computer-readable storage medium is configured to store a computer program or instructions. When the computer program or the instructions are run, the methods performed by the first terminal device in the foregoing aspects are implemented.

According to a ninth aspect, a computer program product including instructions is provided. When the computer program product runs on a computer, the methods in the foregoing aspects are implemented.

According to a tenth aspect, an apparatus is provided, including one or more units configured to perform the method according to any embodiment of this application.

### BRIEF DESCRIPTION OF DRAWINGS

FIG. 1 is a schematic diagram of an application scenario according to an embodiment of this application;
FIG. 2 is a flowchart of a first communication method according to an embodiment of this application;
FIG. 3 is a schematic diagram of a first subpool and a frequency domain position of a sidelink synchronization signal according to an embodiment of this application;
FIG. 4 is a schematic diagram of another application scenario according to an embodiment of this application;
FIG. 5 is a flowchart of a second communication method according to an embodiment of this application;
FIG. 6 is a flowchart of a third communication method according to an embodiment of this application;
FIG. 7 is a schematic diagram of resource selection by a transmit end UE;
FIG. 8 is a schematic diagram of still another application scenario according to an embodiment of this application;
FIG. 9 is a flowchart of a fourth communication method according to an embodiment of this application;
FIG. 10 is a schematic diagram in which a message outside a first subpool cannot be used to reserve a resource in the first subpool according to an embodiment of this application;
FIG. 11 is a flowchart of a fifth communication method according to an embodiment of this application;
FIG. 12 is a schematic diagram in which a message outside a first subpool cannot preempt a resource in the first subpool according to an embodiment of this application;
FIG. 13 is a flowchart of a sixth communication method according to an embodiment of this application;
FIG. 14 is a flowchart of a seventh communication method according to an embodiment of this application;
FIG. 15 is a flowchart of an eighth communication method according to an embodiment of this application;
FIG. 16 is a schematic diagram of a structure of a communication apparatus according to an embodiment of this application; and
FIG. 17 is a schematic diagram of a structure of a terminal device according to an embodiment of this application.

### DESCRIPTION OF EMBODIMENTS

To make objectives, technical solution, and advantages of embodiments of this application clearer, the following further describes embodiments of this application in detail with reference to the accompanying drawings.

The following describes some terms or concepts in embodiments of this application, to facilitate understanding by a person skilled in the art.

In embodiments of this application, a terminal device is a device with a wireless transceiver function, and may be a stationary device, a mobile device, a handheld device (for example, a mobile phone), a wearable device, a vehicle-mounted device, or a built-in wireless apparatus (for example, a communication module, a modem, or a chip system) of the foregoing device. The terminal device is configured to connect a person, an object, a machine, and the like, and may be widely used in various scenarios, for example, including but not limited to the following scenarios: cellular communication, device-to-device (device-to-device, D2D) communication, vehicle-to-everything (vehicle to everything, V2X), machine-to-machine/machine type communications (machine-to-machine/machine-type communications, M2M/MTC), internet of things (internet of things, IoT), virtual reality (virtual reality, VR), augmented reality (augmented reality, AR), industrial control (industrial control), self driving (self driving), remote medicine (remote medicine), a smart grid (smart grid), smart furniture, a smart office, a smart wearable, smart transportation, a smart city (smart city), an uncrewed aerial vehicle, a robot, and the like. The terminal device may be sometimes referred to as a user equipment (user equipment, UE), a terminal, an access station, a UE station, a remote station, a wireless communication device, a user apparatus, or the like. For ease of description, in embodiments of this application, an example in which the terminal device is a UE is used for description.

Currently, a resource pool configured for the UE supports a maximum of 40 MHz. To support the maximum bandwidth of the resource pool, a bandwidth supported by the UE is generally greater than 40 MHz. However, in some other communication scenarios, for example, in a communication scenario of a UE, for example, a smartwatch or a smart headset, because a communication data volume is small and there is a need to reduce costs, a UE (for example, the smartwatch or the smart headset) that supports a maximum bandwidth of 20 MHz, 10 MHz, or less appears. The maximum bandwidth supported by the UE is reduced, so that costs of the UE can be correspondingly reduced. Such UE may be referred to as a bandwidth-limited (bandwidth limited) UE, a capability-limited UE, or a flexible-bandwidth (flexible bandwidth) UE.

The bandwidth-limited UE may work on different bands (bands), and the bandwidth-limited UE generally supports a bandwidth less than or equal to 20 MHz. For example, if the bandwidth-limited UE works on a band, the UE generally occupies a bandwidth of a lower 10 MHz or a lower 20 MHz of the band. For example, Table 1 shows examples of some operating bands (operating bands) in an NR system.

**Table 1**

| | | | |
|---|---|---|---|
| n1 | 1920 MHz-1980 MHz | 2110 MHz-2170 MHz | FDD |
| n2 | 1850 MHz-1910 MHz | 1930 MHz-1990 MHz | FDD |
| n3 | 1710 MHz-1785 MHz | 1805 MHz-1880 MHz | FDD |
| n5 | 824 MHz-849 MHz | 869 MHz-894 MHz | FDD |
| n7 | 2500 MHz-2570 MHz | 2620 MHz-2690 MHz | FDD |
| n8 | 880 MHz-915 MHz | 925 MHz-960 MHz | FDD |

In Table 1, n1, n2, and the like respectively indicate different operating bands. Each operating band includes an uplink band and a downlink band. A second column in Table 1 indicates an uplink band. A third column indicates a downlink band. In addition, a fourth column in Table 1 indicates a duplex mode (duplex mode) applied to the band. For example, a frequency division duplex (frequency division duplexing, FDD) mode is applied to all bands in Table 1. The bandwidth-limited UE generally works on an uplink band. For example, the bandwidth-limited UE may work on one or more uplink bands shown in Table 1. For example, if the bandwidth-limited UE works on an uplink band corresponding to n1 shown in Table 1, the UE may occupy a lower 10 MHz of the uplink band, that is, a band on which the UE is located is 1920 MHz to 1930 MHz. Alternatively, the UE may occupy a lower 20 MHz of the uplink band, that is, a band on which the UE is located is 1920 MHz to 1940 MHz. It should be noted that there may be a plurality of operating bands, and Table 1 uses only a part of the operating bands as an example.

For example, a type of bandwidth-limited UE that is concerned in embodiments of this application is a reduced capability UE (reduced capability UE, RedCap UE). This type of UE is referred to as the RedCap UE because compared with an existing common NR UE, the RedCap UE usually supports only a lower bandwidth, for example, 20 MHz, and supports fewer transmit and receive antennas, for example, only 1T1R (to be specific, one transmit and one receive that may be understood as one transmit antenna and one receive antenna) or 1T2R (to be specific, one transmit and two receive that may be understood as one transmit antenna and two receive antennas). Because the supported bandwidth is reduced and a quantity of supported antennas is also reduced, a capability of this type of UE is limited. For example, because the supported bandwidth is reduced, resources that can be invoked by such type of UE are reduced. Because the quantity of supported antennas is reduced, a data transmit and receive capability of this type of UE is limited. According to research content of an existing subject, the RedCap UE may include one or more of the following types of UEs: a wearable product, a video surveillance device, a smart vehicle-related device (for example, a smart vehicle, a vehicle-mounted apparatus, and/or the like), and an industrial sensor device.

A network device in embodiments of this application may include, for example, an access network device and/or a core network device. The access network device is a device having a wireless transceiver function, and is configured to communicate with the terminal device. The access network device includes but is not limited to a base station (BTS, NodeB, eNodeB/eNB, or gNodeB/gNB) and a transmission reception point (transmission reception point, TRP) in the foregoing communication systems, a future evolved 3^{rd} generation partnership project (3^{rd} generation partnership project, 3GPP) base station, an access node in a wireless fidelity (wireless fidelity, Wi-Fi) system, a wireless relay node, a wireless backhaul node, and the like. The base station may be a macro base station, a micro base station, a pico base station, a small cell, a relay station, or the like. A plurality of base stations may support networks of a same access technology, or may support networks of different access technologies. The base station may include one or more co-site or non-co-site transmission reception points. The access network device may alternatively be a radio controller, a central unit (central unit, CU), and/or a distributed unit (distributed unit, DU) in a cloud radio access network (cloud radio access network, CRAN) scenario. The access network device may alternatively be a server or the like. For example, a network device in a vehicle to everything (vehicle to everything, V2X) technology may be a road side unit (road side unit, RSU). The following uses an example in which the access network device is a base station for description. The base station may communicate with the terminal device, or may communicate with the terminal device through a relay station. The terminal device may communicate with a plurality of base stations in different access technologies. The core network device is configured to implement functions such as mobility management, data processing, session management, and policy and charging. Names of devices that implement core network functions in systems of different access technologies may be different. This is not limited in embodiments of this application. A 5G system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus for implementing a function of the network device may be a network device, or may be an apparatus that can support the network device in implementing the function, for example, a chip system, and the apparatus may be installed in the network device. In the technical solutions provided in embodiments of this application, the technical solutions provided in embodiments of this application are described by using an example in which the apparatus for implementing the function of the network device is the network device.

In embodiments of this application, unless otherwise specified, a quantity of a noun indicates "a singular noun or a plural noun", namely, "one or more". "At least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. For example, A/B indicates A or B. At least one of the following items (pieces) or a similar expression thereof refers to any combination of these items, including any combination of singular items (pieces) or plural items (pieces). For example, at least one of a, b, or c indicates a, b, c, a and b, a and c, b and c, or a, b, and c, where a, b, and c may be singular or plural.

Ordinal numerals such as "first" and "second" mentioned in embodiments of this application are used to distinguish between a plurality of objects, and are not intended to limit sizes, content, a sequence, a time sequence, priorities, importance degrees, or the like of the plurality of objects. For example, first information and second information may be same or different information. In addition, the names do not indicate a difference between sizes, content, priorities, importance, or the like of the two pieces of information. In addition, step numbers in embodiments described in this application are merely used to distinguish between different steps, but are not used to limit a sequence of the steps. For example, step S201 may occur before step S202, or may occur after step S202, or may occur at the same time as step S202.

In embodiments of this application, a first resource pool may be configured for a first terminal device based on the first information. The first resource pool is, for example, a subpool (which may also be referred to as a first subpool) in a mixed resource pool, or the first resource pool may not be a subpool, but an independent resource pool. In this way, a problem of configuring a resource pool or a subpool for the terminal device is resolved. In addition, the first information may configure a reference frequency domain position of the first resource pool. The first terminal device can determine a frequency domain position of the first resource pool based on the reference frequency domain position and the second information. For example, the first information is sent by the network device. Because the first information includes less content, transmission overheads can be reduced.

The technical solutions provided in embodiments of this application may be applied to a 4^{th} generation (4^{th} generation, 4G) mobile communication technology system, for example, a long term evolution (long term evolution, LTE) system, or may be applied to a 5G system, for example, a new radio (new radio, NR) system, or may be further applied to a next generation mobile communication system or another similar communication system. This is not specifically limited. In addition, the technical solutions provided in embodiments of this application may be applied to a device-to-device (device-to-device, D2D) scenario, for example, an NR-D2D scenario, or may be applied to a vehicle to everything (vehicle to everything, V2X) scenario, for example, an NR-V2X scenario. For example, the technical solutions may be applied to an Internet of Vehicles, for example, V2X and vehicle-to-vehicle (vehicle-to-vehicle, V2V), or may be applied to fields such as intelligent driving, assisted driving, or intelligent networked vehicles. For another example, the technical solutions may be applied to scenarios such as extended reality (extended reality, XR) or projection.

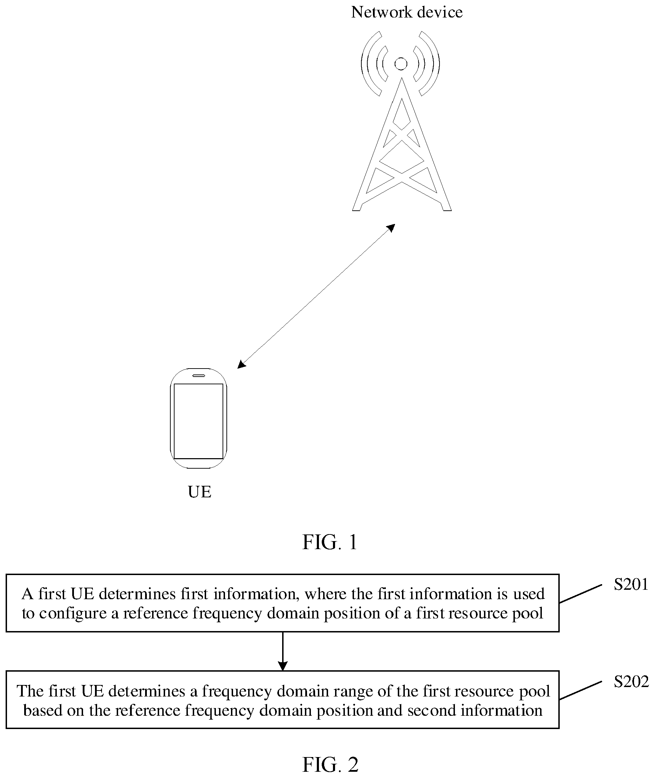

FIG. 1 is a schematic diagram of an application scenario according to an embodiment of this application. FIG. 1 includes a network device and a UE, and the network device can communicate with the UE. For example, the network device may send first information to the UE, so that a resource pool is configured for the UE. Alternatively, the first information may not be sent by the network device, and the UE obtains the first information in another manner. In this case, the network device in FIG. 1 is not a necessary device, and may exist or may not exist. In addition, if the first information is not sent by the network device, the UE may be in coverage of the network device, or may be out of coverage of the network device.

The network device in FIG. 1 is, for example, an access network device, and the access network device is, for example, a base station. The access network device corresponds to different devices in different systems. For example, the access network device may correspond to an eNB in a 4G system, and corresponds to an access network device in 5G in a 5G system, for example, a gNB. Certainly, the technical solutions provided in embodiments of this application may also be applied to a future mobile communication system. Therefore, the access network device in FIG. 1 may also correspond to a network device in the future mobile communication system. In embodiments of this application, an example in which the access network device is a base station is used. Actually, with reference to the foregoing descriptions, the access network device may alternatively be a device such as an RSU.

The following describes the method provided in embodiments of this application with reference to the accompanying drawings. In the accompanying drawings corresponding to embodiments of this application, all optional steps are represented by dashed lines. Optionally, a resource included in a "resource pool" or a "subpool" in embodiments of this application may be a resource used for sidelink communication. Similarly, optionally, the "resource" in embodiments of this application may also be a resource used for sidelink communication.

An embodiment of this application provides a first communication method. FIG. 2 is a flowchart of the method. The method may be applied to a network architecture shown in FIG. 1. For example, a first UE in the method is the UE in FIG. 1, and a network device in the method is the network device in FIG. 1.

S201: The first UE determines first information, where the first information is used to configure a reference frequency domain position of a first resource pool. The reference frequency domain position of the first resource pool includes, for example, one or more of a start frequency domain position, an end frequency domain position, or an intermediate frequency domain position of the first resource pool.

For example, if a mixed resource pool exists, different types of UEs may be supported to perform transmission in the mixed resource pool. To avoid mutual interference between the various types of UEs in the mixed resource pool, subpools may be separately allocated to the different types of UEs in the mixed resource pool. In this way, the UEs can separately perform communication in the subpools. This reduces interference between the UEs. The first resource pool is located in the mixed resource pool. For example, the first resource pool is a subpool allocated to a first-type UE. If a type of the first UE is a first type, the first UE may use the first resource pool. In this case, the first resource pool may also be referred to as a first subpool. For example, a bandwidth of the mixed resource pool is 40 MHz, and all types of UE such as a full-sensing UE, a partial-sensing UE, and a RedCap UE may use the mixed resource pool. For example, in the mixed resource pool, a bandwidth of 0 MHz to 20 MHz is configured as a subpool used by the full-sensing UE, a bandwidth of 10 MHz to 30 MHz is configured as a subpool used by the partial-sensing UE, and a bandwidth of 30 MHz to 40 MHz is configured as a subpool used by the RedCap UE.

Alternatively, the first resource pool is not a subpool in the mixed resource pool, but an independent resource pool. In embodiments of this application, an example in which the first resource pool is the first subpool is used for description. In other words, the "first subpool" described below may be replaced with the "first resource pool". The first type is, for example, a bandwidth-limited (or bandwidth limited) type, or another type. For example, a type of bandwidth-limited UE is the RedCap UE.

Optionally, the first information may further include first indication information, or first indication information may not be included in the first information, but is sent by using another message. For example, the first indication information indicates a type of a UE to which the first subpool is applicable, that is, indicates which type of UE to which the first subpool is applicable. Alternatively, the first indication information indicates a type of a UE to which the reference frequency domain position is applicable, or the first indication information directly indicates a type of an applicable UE. For example, the first indication information includes an identifier of the type of the applicable UE, which is equivalent to indicating the type of the UE. For example, the first subpool is configured for the first-type UE, and the first type is, for example, the RedCap UE. In this case, the first indication information may indicate that the first subpool is applicable to the RedCap UE. A UE that obtains the first information can determine, based on the first indication information and a type of the UE, whether the UE can use the first subpool. Alternatively, the first indication information may indicate a bandwidth of a UE to which the first subpool is applicable, that is, indicate a bandwidth supported by a UE to which the first subpool is applicable. For example, the first indication information indicates that the first subpool is applicable to a UE supporting a bandwidth of 10 MHz, or indicates that the first subpool is applicable to a UE supporting a bandwidth of 20 MHz. The UE that obtains the first information can determine, based on the first indication information and a bandwidth of the UE, whether the UE can use the first subpool.

For example, the first information is sent by the network device. In this case, a manner in which the first UE determines the first information is, for example, that the network device sends the first information to the first UE. Correspondingly, the first UE receives the first information from the network device. In this way, the first UE determines the first information. Alternatively, the first information may be preconfigured in the first UE. In this case, the first UE may obtain the preconfigured first information. Alternatively, the first information may be predefined in a protocol, and the like. In this case, the first UE may determine the first information according to the protocol.

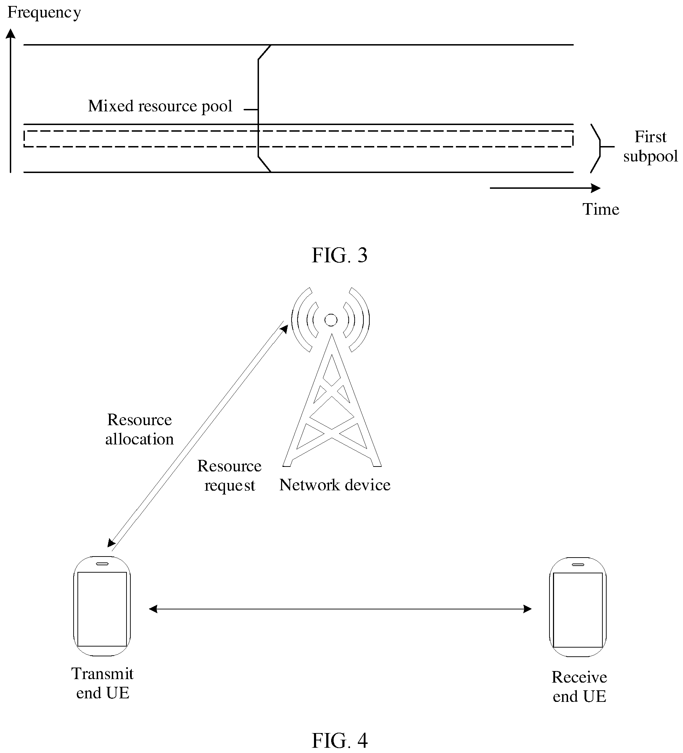

A problem is considered. In a sidelink communication scenario, a sidelink synchronization signal is sent by a UE, and a frequency domain position of the sidelink synchronization signal is fixed. All types of UEs need to monitor the sidelink synchronization signal. Otherwise, the UEs may fail to synchronize to a synchronization source with a highest priority. If a subpool allocated to the UE does not include the frequency domain position of the sidelink synchronization signal, the UE further needs to switch to the frequency domain position of the sidelink synchronization signal to monitor the sidelink synchronization signal. For the UE, implementation is complex, and power consumption is high. In view of this, it is proposed in embodiments of this application that a frequency domain range of the first subpool allocated to the first UE may include a frequency domain range of the sidelink synchronization signal (in other words, may include the frequency domain position of the sidelink synchronization signal). In this way, the UE does not need to switch a working frequency. This simplifies a working process of the UE, and can reduce power consumption. For example, the sidelink synchronization signal occupies 132 subcarriers in frequency domain (for example, the sidelink synchronization signal is a sidelink synchronization signal block (sidelink synchronization signal block, S-SSB), a sidelink absolute frequency SSB release 16 (sl-AbsoluteFrequencySSB-r16) parameter may indicate an intermediate subcarrier occupied by the S-SSB, for example, indicate a 66^{th} subcarrier occupied by the S-SSB, and in this case, the 132 subcarriers occupied by the S-SSB can be determined based on the parameter). That is, if the frequency domain range of the sidelink synchronization signal includes the 132 subcarriers, the frequency domain range of the first subpool may include the 132 subcarriers. FIG. 3 is a schematic diagram of the first subpool and the frequency domain position of the sidelink synchronization signal. A dashed box in FIG. 3 indicates the frequency domain position of the sidelink synchronization signal. In FIG. 3, the first subpool is included in the mixed resource pool, and the frequency domain position of the sidelink synchronization signal is located in the frequency domain range of the first subpool.

To enable the frequency domain range of the first subpool to include the frequency domain position of the sidelink synchronization signal, the frequency domain position of the sidelink synchronization signal may be considered when the reference frequency domain position is designed. In an optional implementation of the reference frequency domain position, all or some of frequency domain positions included in the reference frequency domain position are a frequency domain position of a subchannel on which the sidelink synchronization signal is located. The sidelink synchronization signal may occupy one or more subchannels. If the sidelink synchronization signal occupies one subchannel, the reference frequency domain position may include a frequency domain position of the subchannel. If the sidelink synchronization signal occupies a plurality of subchannels, if the reference frequency domain position includes one frequency domain position, the reference frequency domain position may be a frequency domain position of a lowest-frequency subcarrier in the plurality of subchannels, a frequency domain position of a highest-frequency subcarrier in the plurality of subchannels, a frequency domain position of an intermediate-frequency subcarrier in the plurality of subchannels, or a frequency domain position of any subcarrier in the plurality of subchannels. Alternatively, if the reference frequency domain position includes a plurality of frequency domain positions (for example, the reference frequency domain position includes a start frequency domain position, an end frequency domain position, and the like of the first subpool), the reference frequency domain position may include frequency domain positions of some or all of the plurality of subchannels. For example, the reference frequency domain position includes the start frequency domain position and the end frequency domain position of the first subpool. The start frequency domain position of the first subpool is a frequency domain position of a lowest-frequency subcarrier in the plurality of subchannels. The end frequency domain position of the first subpool is another frequency domain position instead of the frequency domain positions of the subchannels on which the sidelink synchronization signal is located; or the end frequency domain position of the first subpool is a frequency domain position of a highest-frequency subchannel in the plurality of subchannels.

If the reference frequency domain position is the frequency domain position of the subchannel on which the sidelink synchronization signal is located, the first information indicates the reference frequency domain position. In an indication manner, the first information may indicate (or include) a subchannel number of the subchannel on which the reference frequency domain position is located. A corresponding subchannel can be indicated by using the subchannel number. For example, if the reference frequency domain position includes the frequency domain position of the lowest-frequency subcarrier in the plurality of subchannels occupied by the sidelink synchronization signal, the first information may indicate (or include) a subchannel number of the lowest-frequency subcarrier.

In another optional implementation of the reference frequency domain position, some or all of frequency domain positions included in the reference frequency domain position are a frequency domain position of a first subcarrier on which the sidelink synchronization signal is located. The first subcarrier is, for example, a lowest-frequency subcarrier in the subcarriers occupied by the sidelink synchronization signal, a highest-frequency subcarrier in the subcarriers occupied by the sidelink synchronization signal, an intermediate-frequency subcarrier in the subcarriers occupied by the sidelink synchronization signal (for example, the sidelink synchronization signal occupies 132 subcarriers in total, and the first subcarrier may be a 66^{th} or a 67^{th} subcarrier), or any subcarrier in the subcarriers occupied by the sidelink synchronization signal.

In embodiments of this application, the sidelink synchronization signal is, for example, an S-SSB, or may be another signal used for sidelink synchronization.

Optionally, in addition to the reference frequency domain position, the first information further includes other information for configuring the first subpool. For example, the first information further includes a quantity of subchannels occupied by the first subpool, so that the first UE can determine a frequency domain position of the first subpool based on the reference frequency domain position and the quantity of the subchannels occupied by the first subpool. Content included in the first information is complete, and the first UE can determine the frequency domain position of the first subpool based on the first information without considering other information. Alternatively, the first information includes only the reference frequency domain position, and does not include other information. The first UE may determine the frequency domain position of the first subpool based on the first information and other information. The first information includes little content. If the first information is sent by the network device, transmission overheads can be reduced.

S202: The first UE determines a frequency domain range of the first subpool based on the reference frequency domain position and second information. The second information may include or indicate one or more of the following: a bandwidth supported by the first UE, a bandwidth of one subchannel, or the quantity of the subchannels occupied by the first subpool.

For example, if the second information includes one item, the second information is determined in a manner, for example, a manner 1 of being included in the first information, a manner 2 of being preconfigured in the first UE, or a manner 3 of being predefined in a protocol. Alternatively, if the second information includes a plurality of items, the plurality of items may be determined in a same manner. For example, all the items are included in the first information, or all the items are preconfigured in the first UE, or all the items are predefined in a protocol. Alternatively, if the second information includes a plurality of items, the plurality of items may be determined in a plurality of manners. For example, the second information includes the bandwidth supported by the first UE, the bandwidth of one subchannel, and the quantity of the subchannels occupied by the first subpool. Any two of the three items may be determined in the manner 1, and the remaining item may be determined in the manner 2. For another example, the second information includes the bandwidth supported by the first UE, the bandwidth of one subchannel, and the quantity of the subchannels occupied by the first subpool. Different items in the three items are determined in different manners. For example, the first item in the three items may be determined in the manner 3. The second item of the three items may be determined in the manner 1, and the third item of the three items may be determined in the manner 2.

For example, the second information includes a first quantity, and the first quantity is the quantity of the subchannels occupied by the first subpool. The reference frequency domain position is, for example, the start frequency domain position of the first subpool. In this case, the first UE determines that a range from the start frequency domain position to the end frequency domain position of the first quantity of subchannels is the frequency domain range of the first subpool.

For another example, the second information includes the bandwidth supported by the first UE and the size of one subchannel. The reference frequency domain position is, for example, the start frequency domain position of the first subpool. In this case, the first UE can determine, based on the bandwidth supported by the first UE and the size of one subchannel, the quantity of the subchannels that can be occupied by the first subpool, and then determine the size of the first subpool based on the reference frequency domain position and the quantity of the subchannels occupied by the first subpool. For example, a subcarrier spacing is 15 kHz, the size of one subchannel is 10 resource blocks (resource blocks, RBs), that is, 1.8 MHz, and the bandwidth supported by the first UE is 20 MHz. The first UE determines that a total bandwidth of the subchannels occupied by the first subpool needs to be less than or equal to 20 MHz. Based on the size of one subchannel, a total bandwidth of 11 subchannels is 19.8 MHz, and a total bandwidth of 12 subchannels is 21.6 MHz. It is clear that the first subpool occupies a maximum of 11 subchannels. Therefore, the first UE determines that the first subpool occupies the 11 subchannels. The reference frequency domain position is, for example, the start frequency domain position of the first subpool, and the start frequency domain position is, for example, indicated by a subchannel number. In this case, the first UE determines 11 subchannels starting from a subchannel indicated by the subchannel number as the frequency domain range of the first subpool. It should be noted that, because a value obtained by dividing the bandwidth supported by the first UE by the size of one subchannel is not necessarily an integer, the subchannels occupied by the first subpool may not occupy the entire bandwidth supported by the first UE, that is, the frequency domain range of the first subpool may be a partial bandwidth supported by the first UE.

Different reference frequency domain positions indicate different frequency domain ranges of the first subpool. For example, the first UE determines the quantity of the subchannels occupied by the first subpool, and the reference frequency domain position is the start frequency domain position of the first subpool. In this case, the reference frequency domain position may be a frequency domain position of a lowest frequency in the first subpool. The first UE determines the frequency domain range of the first subpool from the reference frequency domain position to a higher frequency based on the quantity of the subchannels occupied by the first subpool. Alternatively, the reference frequency domain position is the end frequency domain position of the first subpool. In this case, the reference frequency domain position may be a frequency domain position of a highest frequency in the first subpool. The first UE determines the frequency domain range of the first subpool from the reference frequency domain position to a lower frequency based on the quantity of the subchannels occupied by the first subpool. Alternatively, the reference frequency domain position is the intermediate frequency domain position of the first subpool. The first UE determines the frequency domain range of the first subpool from the reference frequency domain position separately to a higher frequency and a lower frequency based on the quantity of the subchannels occupied by the first subpool.

If the bandwidth of the first subpool is greater than the bandwidth supported by the first UE, the first UE cannot use resources that are in the bandwidth of the first subpool and that exceed the bandwidth supported by the first UE. For example, the first UE cannot perform monitoring on these resources, and cannot send data on these resources either. Therefore, to enable the first UE to support the first subpool, optionally, the bandwidth of the first subpool may be less than or equal to the bandwidth of the first UE, so that the first UE may transmit data on a resource included in the first subpool.

After the frequency domain range of the first subpool is determined, the first UE can select a resource from the first subpool to communicate with another UE.

In embodiments of this application, the first resource pool may be configured for a first terminal device based on the first information. The first resource pool is, for example, a subpool (which may also be referred to as the first subpool) in the mixed resource pool, or the first resource pool may not be a subpool, but an independent resource pool. In this way, a problem of configuring a resource pool or a subpool for the terminal device is resolved. In addition, the first information may configure the reference frequency domain position of the first resource pool. The first terminal device can determine a frequency domain position of the first resource pool based on the reference frequency domain position and the second information. For example, the first information is sent by the network device. Because the first information includes less content, transmission overheads can be reduced.

Two resource selection mechanisms are introduced in NR-V2X: a mode (mode) 1 and a mode 2. The mode 1 is a mechanism for a base station to allocate a resource, and the mode 2 is a mechanism for a UE to select a resource. In the mode 1, before sending a message to a receive end UE (Rx UE), a transmit end UE (Tx UE) needs to apply for a resource from the network device, the network device allocates the resource to the Tx UE, and then the Tx UE sends the message to the Rx UE on the allocated resource. One of the transmit end UE and the receive end UE that need to communicate may have a low capability, or both of the two UEs may have low capabilities. However, when allocating a resource, the network device may not learn of capabilities of the UEs. If at least one UE in the two UEs has a low capability, and the network device allocates a resource that cannot be supported by the UE with the low capability (for example, the resource allocated by the base station is located outside a subpool supported by the UE with the lower capability), communication between the two UEs may fail.

In view of this, an embodiment of this application provides a second communication method. By using the method, the network device may allocate an appropriate resource to a UE.

FIG. 4 is a schematic diagram of an application scenario according to an embodiment of this application. FIG. 4 includes a network device, a transmit end UE, and a receive end UE. The network device can communicate with the transmit end UE, and the transmit end UE may request a resource from the network device, so that the resource can be allocated to the transmit end UE. The network device can also communicate with the receive end UE, that is, the receive end UE may be in coverage of the network device. Alternatively, the network device may not communicate with the receive end UE, that is, the receive end UE is out of coverage of the network device. The network device in FIG. 4 is, for example, an access network device. For descriptions of the access network device, refer to the foregoing descriptions.

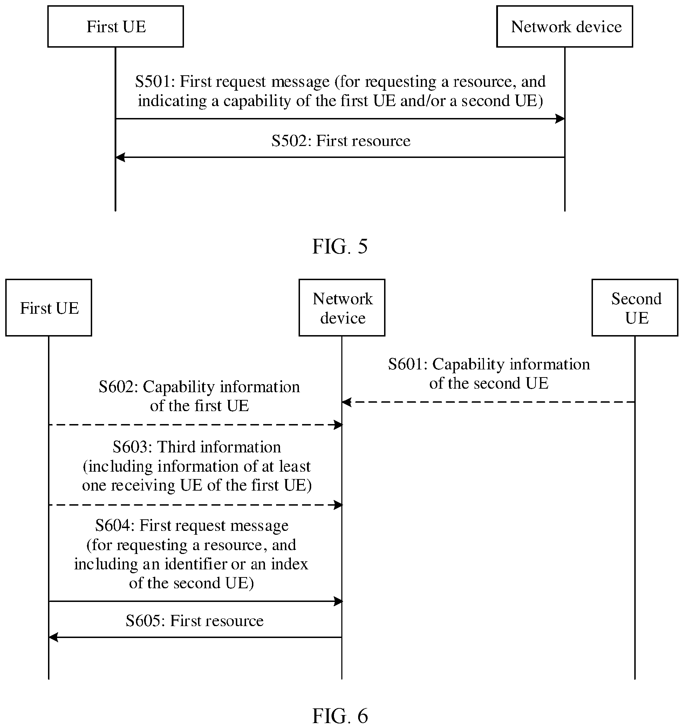

FIG. 5 is a flowchart of the method. The embodiment shown in FIG. 5 may be applied to the scenario shown in FIG. 4. For example, a first UE in the embodiment shown in FIG. 5 is the transmit end UE in FIG. 4, and a second UE in the embodiment shown in FIG. 5 is the receive end UE in FIG. 4.

S501: The first UE sends a first request message to the network device. Correspondingly, the network device receives the first request message from the first UE. The first request message may be used to request a resource. The resource is used by the first UE to send data to the second UE. That is, before sending the data to the second UE, the first UE needs to first request the resource from the network device. In this case, the first UE may send the first request message to the network device. The first request message is, for example, a buffer status report (buffer status report, BSR), or may be another message for requesting a resource.

In addition to information for requesting a resource, the first request message may further include second indication information. It may be understood that the first request message includes two fields, one of the two fields carries the information for requesting a resource, and the other of the two fields carries the second indication information; the information for requesting a resource and the second indication information may be carried in a field included in the first request message; the first request message may not include the information for requesting a resource, once being sent, the first request message indicates to request a resource, and the first request message includes the second indication information; or request messages for requesting different resources are carried on different resources. For example, the network device preconfigures different resources for different resource pools, and a request message for requesting a RedCap resource and a request message for requesting a non-RedCap resource are carried on different resources. In this case, the network device can determine, based on a resource that carries a request message, a type of the resource requested by using the request message. For example, the first request message is carried on a resource A, and the resource A is configured for the request message for requesting a RedCap resource. Therefore, the network device can determine, based on the resource A, that the resource requested by using the first request message is a RedCap resource. In this case, the resource that carries the request message may be considered as the second indication information. In this case, it cannot be considered that the first request message includes the second indication information, but the first request message corresponds to the second indication information. The RedCap resource is a resource in a resource pool used by a RedCap UE, and the non-RedCap resource is a resource in a resource pool used by a non-RedCap UE.

If the first request message includes the second indication information, the second indication information indicates, for example, a capability of the first UE and/or a capability of the second UE. The second indication information needs to indicate a capability of one UE, for example, by indicating a type of the UE. For example, the second indication information indicates that the first UE or the second UE or both are a first-type UE. The following uses an example in which the first-type UE is a RedCap UE. The first UE learns of whether the first UE is a RedCap UE. In addition, the first UE may further determine in advance whether the second UE is a RedCap UE. For example, the first UE may obtain capability information of the second UE from a higher layer (for example, a MAC layer or an application layer) of the first UE, or the first UE may obtain capability information of the second UE when communicating with the second UE. For example, the first UE may obtain the capability information of the second UE when establishing a sidelink connection with the second UE, or the first UE may obtain the capability information of the second UE after successfully establishing a sidelink connection with the second UE. Therefore, the first UE can determine whether the second UE is a RedCap UE. Alternatively, the first UE may obtain the capability information of the second UE in another manner. In this indication manner, if neither the first UE nor the second UE is a RedCap UE, the first request message may not include the second indication information, and the network device can determine, based on the fact that the first request message does not include the second indication information, that both the first UE and the second UE are non-RedCap UEs. Alternatively, the first request message may continue to include the second indication information, the second indication information may indicate that both the first UE and the second UE are non-RedCap UEs, and the network device may determine, based on the second indication information, that both the first UE and the second UE are non-RedCap UEs.

Alternatively, the second indication information may indicate a capability of one UE by indicating a band of the UE. For example, the second indication information indicates a band supported by the first UE and/or the second UE. For example, if the first UE determines that the first UE is a RedCap UE and the second UE is not a RedCap UE, the second indication information may indicate a band supported by the first UE, but does not indicate a band supported by the second UE, so that overheads of the second indication information are reduced. Alternatively, the second indication information may indicate a band supported by the first UE and a band supported by the second UE, so that content indicated by the first UE is more comprehensive. If the first UE determines that the second UE is a RedCap UE and the first UE is not a RedCap UE, an indication manner is similar. For example, the second indication information indicates a band supported by the second UE, but does not indicate a band supported by the first UE. Alternatively, the second indication information may indicate a band supported by the first UE and a band supported by the second UE. If the first UE determines that both the second UE and the first UE are RedCap UEs, the second indication information may also indicate a band supported by the first UE and a band supported by the second UE. The second indication information indicates a band supported by one UE. For example, in an indication manner, the second indication information indicates a start frequency domain position and a bandwidth of the band, indicates an end frequency domain position and a bandwidth of the band, or indicates a start frequency domain position and an end frequency domain position of the band, or the like. Alternatively, another indication manner may be used. For a manner in which the first UE determines the band supported by the second UE, refer to the foregoing manner in which the first UE determines the capability information of the second UE. In this indication manner, if neither the first UE nor the second UE is a RedCap UE, the first request message may not include the second indication information, and the network device can determine, based on the fact that the first request message does not include the second indication information, that both the first UE and the second UE are non-RedCap UEs. Alternatively, the first request message may continue to include the second indication information, the second indication information continues to indicate the band supported by the first UE and/or the second UE, and the network device may determine, based on the second indication information, that both the first UE and the second UE are non-RedCap UEs.

Alternatively, the second indication information may indicate a capability of one UE by indicating a bandwidth supported by the UE. For example, the second indication information indicates a bandwidth supported by the first UE and/or the second UE. For example, if the second UE determines that the first UE is a RedCap UE and the second UE is not a RedCap UE, the second indication information may indicate a bandwidth supported by the second UE, but does not indicate a bandwidth supported by the second UE, so that overheads of the second indication information are reduced. Alternatively, the second indication information may indicate a bandwidth supported by the first UE and a bandwidth supported by the second UE, so that content indicated by the second UE is more comprehensive. If the first UE determines that the second UE is a RedCap UE and the first UE is not a RedCap UE, an indication manner is similar. For example, the second indication information indicates a bandwidth supported by the second UE, but does not indicate a bandwidth supported by the first UE. Alternatively, the second indication information may indicate a bandwidth supported by the first UE and a bandwidth supported by the second UE. If the first UE determines that both the second UE and the first UE are RedCap UEs, the second indication information may also indicate a bandwidth supported by the first UE and a bandwidth supported by the second UE. In this indication manner, if neither the first UE nor the second UE is a RedCap UE, the first request message may not include the second indication information, and the network device can determine, based on the fact that the first request message does not include the second indication information, that both the first UE and the second UE are non-RedCap UEs. Alternatively, the first request message may continue to include the second indication information, the second indication information continues to indicate the bandwidth supported by the first UE and/or the second UE, and the network device may determine, based on the second indication information, that both the first UE and the second UE are non-RedCap UEs.

Certainly, the foregoing manners may also be used together. For example, the second indication information may indicate the band supported by the first UE, the bandwidth supported by the second UE, and the like. That is, the second indication information may use a same indication manner for the first UE and the second UE, or may use different indication manners.

Optionally, before S501, the first UE may further send a scheduling request (scheduling request, SR) to the network device. For example, the network device allocates different SR channels to different types of UEs. An SR channel sent by the first UE corresponds to a capability of the second UE. For example, different SR channels correspond to different types of UEs. The SR channel sent by the first UE corresponds to a type of the second UE, or indicates a type of the second UE. Therefore, the network device can determine the type of the second UE based on the SR channel from the first UE, for example, determine that the second UE is a RedCap UE or is of another type. Alternatively, different SR channels correspond to different subpools. The SR channel sent by the first UE corresponds to a subpool in which a resource requested by the first UE is located, or indicates a subpool in which a resource requested by the first UE is located. Therefore, the network device can determine, based on the SR channel from the first UE, the subpool in which the resource requested by the first UE is located. For example, the network device determines, based on the SR channel from the first UE, that the resource requested by the first UE is a resource in a subpool used by a RedCap UE.

S502: The network device sends a first response message to the first UE. Correspondingly, the first UE receives the first response message from the network device. The first response message indicates a first resource.

After receiving the first request message, the network device may allocate a resource to the first UE. It may be learned from the description of S501 that the second indication information may indicate the capability of the first UE and/or the capability of the second UE. Based on the second indication information, the network device can consider the capability of the first UE and/or the second UE when allocating a resource to the first UE, so that a resource that can be supported by both the first UE and the second UE is allocated to the first UE. For example, a frequency domain position of the first resource is located in the band supported by the first UE, and is also located in the band supported by the second UE. For example, if the first UE or the second UE or both are a RedCap UE, the first resource allocated by the network device to the first UE may be located in a frequency domain range supported by a RedCap UE (for example, the allocated resource is located in a subpool applicable to the RedCap UE), and a bandwidth of the allocated first resource is also a bandwidth supported by the RedCap UE, so that the first UE and the second UE can appropriately communicate. It may be learned that the network device can learn of capabilities of UEs of both communication parties based on the second indication information, so that the network device can allocate an appropriate resource to the UEs, and a success rate of communication between the UEs is increased.

Optionally, requesting a resource from the network device may alternatively be performed by the second UE (namely, the receive end UE). For example, if the first UE needs to send data to the second UE, the first UE may indicate the second UE in advance. After learning that the data is to be received, the second UE may send the first request message to the network device to request resource allocation. In this case, the network device may send the first response message to the second UE. That is, S501 and S502 may alternatively be performed by the second UE.

In the following, an embodiment of this application provides a third communication method. The method is also applicable to the mode 1. By using the method, a network device may also allocate an appropriate resource to a UE. FIG. 6 is a flowchart of the method. The embodiment shown in FIG. 6 may also be applied to the scenario shown in FIG. 4. For example, a first UE in the embodiment shown in FIG. 6 is the transmit end UE in FIG. 4, and a second UE in the embodiment shown in FIG. 6 is the receive end UE in FIG. 4.

S601: The second UE sends capability information of the second UE to the network device. Correspondingly, the network device receives the capability information from the second UE. The capability information of the second UE may indicate a capability of the second UE.

For example, the second UE may send the capability information of the second UE to the network device after random access succeeds, or may send the capability information of the second UE to the network device when communicating with the network device. In addition, the capability information of the second UE may be further updated, and the second UE may send updated capability information to the network device. For example, the capability information of the second UE indicates one or more of the following: a type of the second UE, a bandwidth supported by the second UE, or a band supported by the second UE. When sending the capability information to the network device, the second UE may further send an identifier of the second UE. For example, the identifier of the second UE is related to a service of the second UE, or may be irrelevant to a service of the second UE. The identifier of the second UE may be generated by the second UE, for example, randomly generated, or generated in another manner. Alternatively, the identifier of the second UE may be generated (for example, randomly generated, or generated in another manner) by the network device and allocated to the second UE. After receiving the capability information from the second UE, the network device may store the identifier of the second UE and the capability information of the second UE. For example, the network device stores a correspondence between the identifier of the second UE and the capability information of the second UE.

S602: The first UE sends capability information of the first UE to the network device. Correspondingly, the network device receives the capability information from the first UE. The capability information of the first UE may indicate a capability of the first UE.

S601 may occur before S602, or S601 may occur after S602, or S601 and S602 may occur at the same time. For more content of S602, refer to the descriptions of S601. An implementation is similar.

S603: The first UE sends third information to the network device. Correspondingly, the network device receives the third information from the first UE.

The third information may include information of at least one UE that may communicate with the first UE, or include information of at least one receiving UE of the first UE, where the at least one receiving UE includes, for example, the second UE. For example, the first UE is a vehicle, and the vehicle runs on a road. In this case, the vehicle can predict a receiving UE that may communicate with the vehicle. For example, a road side apparatus, another vehicle, or the like may be the receiving UE of the vehicle. In addition, the third information may be further updated. For example, the first UE is a vehicle. When the vehicle is in a running state, the receiving UE that communicates with the vehicle may change. For example, the vehicle is initially located in a first road section, and the receiving UE that may communicate with the vehicle in the first road section includes a vehicle 1 near the vehicle, and further includes a smart street lamp serving as a road side apparatus. In this case, the third information may include information of the vehicle 1 and information of the smart street lamp. After a period of time, the vehicle travels to a second road section. In the second road section, the receiving UE that may communicate with the vehicle changes to a camera serving as a road side apparatus, and the vehicle 1 and the smart street lamp no longer communicate with the vehicle. In this case, the third information may be updated. Updated third information includes information of the camera, and no longer includes the information of the vehicle 1 and the information of the smart street lamp. If the third information is updated, the first UE may further send the updated third information to the network device after the third information is updated, so that the network device can obtain the latest third information in a timely manner.

In the third information, information of a receiving UE includes, for example, an identifier of the receiving UE and an index corresponding to the identifier. That is, in the third information, one identifier corresponds to one index, or identifiers one-to-one correspond to indices. The index included in the third information may be set by the first UE. For example, the first UE determines that the at least one receiving UE may communicate with the first UE. The first UE adds an identifier of the at least one receiving UE to the third information. In other words, the first UE adds at least one identifier to the third information. In addition, the first UE may further respectively set an index for the at least one identifier, to distinguish between different identifiers. The index of the at least one identifier is, for example, 0, 1, 2, ..., or the like. For example, in the third information, information of the second UE may include the identifier of the second UE and an index corresponding to the identifier of the second UE. For example, the third information is presented in a form of a list, or may be presented in another form. After receiving the third information, the network device may store the third information. For example, the network device stores content included in the third information in a form of a list, where the list includes the identifier of the at least one receiving UE and the index respectively corresponding to the identifier.

Optionally, in embodiments of this application, an identifier of a UE is, for example, a layer (layer, L)-1 ID or an L-2 ID of the UE, and the identifier of the UE may be used to determine the UE. For a UE, a physical layer of the UE may obtain an identifier of the UE from a higher layer of the UE. The higher layer is, for example, an application layer (application layer) or a MAC layer. For example, the application layer of the UE may determine the identifier of the UE. The application layer may transfer the determined identifier to the MAC layer of the UE, and then the MAC layer transfers the identifier to the physical layer of the UE. Alternatively, the identifier of the UE may be independently determined by the UE. Alternatively, the identifier of the UE may be configured by the network device. If the identifier of the UE is not configured by the network device, the network device may obtain the identifier of the UE in advance (for example, in S601, the second UE sends the identifier of the second UE and the capability information of the second UE to the network device, and the network device obtains the identifier of the second UE). In this way, the network device can enable the index in the third information to correspond to the capability information that is of the UE and that is stored in the network device.

Alternatively, in the third information, information of a receiving UE includes, for example, capability information of the receiving UE and an index corresponding to the capability information. That is, in the third information, one piece of capability information (or a piece of capability information) corresponds to one index, or the pieces of capability information one-to-one correspond to the indices. The index included in the third information may be set by the first UE. For example, the first UE determines that the at least one receiving UE may communicate with the first UE. The first UE adds capability information of the at least one receiving UE to the third information. In other words, the first UE adds at least one piece of capability information to the third information. In addition, the first UE may further respectively set an index for the at least one piece of capability information, to distinguish between different pieces of capability information. For example, in the third information, information of the second UE may include the capability information of the second UE and an index corresponding to the capability information of the second UE. If this manner is used, S601 may not be performed, and the network device can obtain the capability information of the second UE based on the third information. This helps save storage space of the network device. In addition, if this manner is used, the first UE needs to obtain the capability information of the second UE. For example, the first UE may obtain the capability information of the second UE from a higher layer (for example, a MAC layer or an application layer) of the first UE, or the first UE may obtain the capability information of the second UE when communicating with the second UE. For example, the first UE may obtain the capability information of the second UE when establishing a sidelink connection with the second UE, or the first UE may obtain the capability information of the second UE after successfully establishing a sidelink connection with the second UE.

For example, the third information is presented in a form of a list, or may be presented in another form.

S604: The first UE sends a first request message to the network device. Correspondingly, the network device receives the first request message from the first UE. The first request message may be used to request a resource. The resource is used by the first UE to send data to the second UE, or the resource is a resource used for sidelink transmission. That is, before sending the data to the second UE, the first UE needs to first request the resource from the network device. In this case, the first UE may send the first request message to the network device. The first request message is, for example, a BSR, or may be another message for requesting a resource.

In addition to information for requesting a resource, the first request message may further include second indication information. It may be understood that the first request message includes two fields, one of the two fields carries the information for requesting a resource, and the other of the two fields carries the second indication information; the information for requesting a resource and the second indication information may be carried in a field included in the first request message; or the first request message may not include the information for requesting a resource, and once being sent, the first request message indicates to request a resource.

For example, the second indication information includes the identifier of the second UE, or includes the index of the second UE. For example, if information that is of a receiving UE and that is included in second information includes an identifier of the receiving UE and a corresponding index, the second indication information may include the identifier of the second UE or include the index of the second UE. Because the network device has stored the correspondence between the capability information of the second UE and the identifier of the second UE, if the second indication information includes the identifier of the second UE, the network device may determine the capability information of the second UE based on the identifier of the second UE. If the second indication information includes the index of the second UE, the network device may determine the identifier of the second UE from the third information based on the index of the second UE, and then determine the capability information of the second UE based on the identifier of the second UE. In this indication manner, the first UE does not need to determine the capability of the second UE. The second indication information may directly include the identifier of the second UE, and the network device determines the capability of the second UE.

Alternatively, if information that is of a receiving UE and that is included in second information includes capability information of the receiving UE and a corresponding index, the second indication information may include the index of the second UE. The network device does not need to prestore the capability information of the second UE, but may determine the capability information of the second UE from the third information based on the index of the second UE.

For example, the first UE sends the first request message to the network device on a scheduling request (scheduling request, SR) channel. For example, the network device allocates different SR channels to different UEs. Therefore, the network device can determine the first UE based on the SR channel, to determine whether a correspondence between an identifier of the first UE and the capability information of the first UE is stored. If the correspondence is stored, the network device may determine the capability information of the first UE, to determine whether the first UE is a first-type UE.

S605: The network device sends a first response message to the first UE. Correspondingly, the first UE receives the first response message from the network device. The first response message indicates a first resource.

After receiving the first request message, the network device may allocate a resource to the first UE. Based on the second indication information, the network device can consider the capability of the first UE and/or the second UE when allocating a resource to the first UE, so that a resource that can be supported by both the first UE and the second UE is allocated to the second UE. For example, a frequency of the first resource is located in a band supported by the second UE, and is also located in the band supported by the second UE. For example, if the first UE or the second UE or both are a RedCap UE, the first resource allocated by the network device to the first UE may be located in a frequency domain range supported by a RedCap UE (for example, the allocated resource is located in a subpool applicable to the RedCap UE), and a bandwidth of the allocated first resource is also a bandwidth supported by the RedCap UE, so that the first UE and the second UE can appropriately communicate. It may be learned that the network device can learn of capabilities of UEs of both communication parties based on the second indication information, so that the network device can allocate an appropriate resource to the UEs, and a success rate of communication between the UEs is increased.

Optionally, requesting a resource from the network device may alternatively be performed by the second UE (namely, the receive end UE). For example, if the first UE needs to send data to the second UE, the first UE may indicate the second UE in advance. After learning that the data is to be received, the second UE may send the first request message to the network device to request resource allocation. In this case, the network device may send the first response message to the second UE. That is, S604 and S605 may be performed by the second UE.

S601 to S603 are optional steps. In addition, the embodiment shown in FIG. 5 and the embodiment shown in FIG. 6 may be applied separately, or may be applied in combination.

As described above, two resource selection mechanisms are introduced in NR-V2X: a mode 1 and a mode 2. The mode 1 is a mechanism for a base station to allocate a resource, and the mode 2 is a mechanism for a UE to select a resource. Both the embodiment shown in FIG. 5 and the embodiment shown in FIG. 6 describe solutions related to the mode 1. The following describes a solution related to the mode 2. In the mode 2, a sensing behavior is introduced on a side of a transmit end UE. For periodic and aperiodic services, the transmit end UE can sense a channel occupation status and a resource reservation status at some future moments, to identify whether these resources are occupied. For periodic services, a time interval between periodic resources is a periodicity. The periodicity may be an integer multiple of 100 ms, or a discrete value like 1 ms to 99 ms. A resource reservation value of aperiodic services is generally within 32 slots.

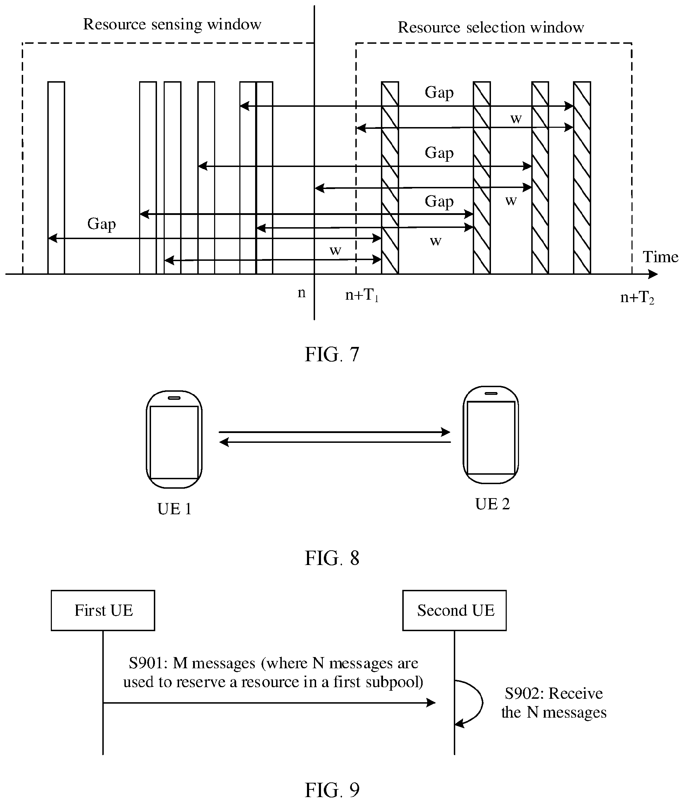

FIG. 7 is a schematic diagram of resource selection by a UE (for example, a transmit end UE). The UE may perform sensing on all slots in a resource sensing window (sensing window) shown in FIG. 7 in a manner, for example, a sensing manner of monitoring sidelink control information (sidelink control information, SCI), to determine a channel occupation status and a resource reservation status at some future moments. The transmit end UE may select an available resource in a resource selection window (selection window) based on a sensing result. For example, the transmit end UE selects, in the resource selection window based on strength of a reservation signal, a resource that is not reserved or that is reserved but has weak signal strength of the reservation signal for transmission. A box marked with "\" in FIG. 7 indicates a candidate resource determined by the transmit end UE. A gap (gap) in FIG. 7 indicates a periodic resource reservation status. That is, a resource that is in the selection window and that is indicated by the "gap" is unavailable and needs to be excluded during resource selection. w indicates an aperiodic resource reservation status. That is, a resource that is in the selection window and that is indicated by w is also unavailable, and needs to be excluded during resource selection.

Currently, to avoid mutual interference of various types of UEs in a mixed resource pool, subpools may then be separately allocated to the different types of UEs in the mixed resource pool. For a bandwidth-limited UE (or another first-type UE), for example, a RedCap UE, a bandwidth of a subpool allocated to this type of UE may be small, and this type of UE can generally communicate only in the subpool of the UE. The UE cannot sense a resource outside the subpool of the UE. For example, the UE cannot monitor a message sent on the resource outside the subpool of the UE. However, for a non-bandwidth-limited UE (or a second-type UE), for example, a UE with a strong sensing capability or a UE whose power consumption is not limited, subpools of these UEs may include subpools of another type of UE, or have an intersection with subpools of another type of UE, so that this type of UE can perform resource selection in a large range. This improves utilization of the mixed resource pool. However, in the mode 2, a band on which the bandwidth-limited UE can perform sensing is limited. If the non-bandwidth-limited UE sends SCI outside the band on which the bandwidth-limited UE can perform sensing, and the SCI is used to reserve a resource in a subpool with a low capability, the bandwidth-limited UE cannot monitor the SCI. In this case, a reservation mechanism fails, and resource collision may be caused.

In view of this, embodiments of this application provide several solutions, and the several solutions are implemented by using several communication methods. First, a fourth communication method is provided. By using the method, a probability of resource collision can be reduced, and effectiveness of a reservation mechanism can be ensured to a great extent. FIG. 8 shows a scenario to which the method is applicable. FIG. 8 includes a UE 1 and a UE 2. For example, in the following description, a first UE is the UE 1 in FIG. 8, and a second UE is the UE 2 in FIG. 8. FIG. 9 is a flowchart of the method.

S901: The first UE sends M messages. M is a positive integer.

For example, each of the M messages is used to reserve a resource. The resource is used by the first UE to send data. The data may be sent to the second UE, or may be sent to another UE. Optionally, resources reserved by using the M messages may be used to send one transport block (transport block, TB), or may be used to send a plurality of transport blocks.

The first UE is, for example, a second-type UE. A subpool used by the first UE in a mixed resource pool is, for example, referred to as a second subpool. The second UE is, for example, a first-type UE. A subpool used by the second UE in the mixed resource pool is, for example, referred to as a first subpool. A first type is, for example, a bandwidth-limited type, for example, RedCap. A second type is, for example, a non-bandwidth-limited type, for example, a partial-sensing type, a full-sensing type, or a random resource selection type. Alternatively, the second UE is not a first-type UE, but a non-first-type UE. For example, the second UE is also a second-type UE. If the second UE is a non-first-type UE, the second UE may be capable of sensing, on a large band, a message for reserving a resource, or the second UE may be capable of monitoring a PSCCH on a large band. However, a capability of the second UE may be limited in a specific period of time, or a capability of the second UE may be limited in some scenarios. For example, the limiting manner is that the second UE is limited to monitor only the second subpool, and cannot monitor another resource outside the second subpool. For example, to reduce power consumption in a standby time period, in some time periods, the second UE is limited to operate on a narrow bandwidth. That is, the second UE is limited to monitor only the second subpool, and cannot monitor another resource outside the second subpool. In this case, the technical solutions in embodiments of this application may also be applied to the second UE whose capability is limited. In the following description process, an example in which the second UE is a first-type UE is mainly used.

The second subpool includes, for example, the first subpool, or the second subpool has, for example, an intersection with the first subpool. In this case, the first UE sends the M messages in the second subpool, and some or all of resources reserved by using the M messages may be located in the first subpool. For example, there are N messages in the M messages, and resources reserved by using the N messages are located in the first subpool. N is a positive integer, and N is less than or equal to M. If the M messages are not sent in the first subpool, the second UE cannot monitor the M messages, and cannot learn of a reservation status of the first UE for resources in the first subpool. If the second UE also needs to reserve these resources, resource collision may be caused. It should be noted that, in the foregoing description, the "first subpool" in embodiments of this application may be replaced with the "first resource pool". Similarly, the "second subpool" in embodiments of this application may also be replaced with a "second resource pool".

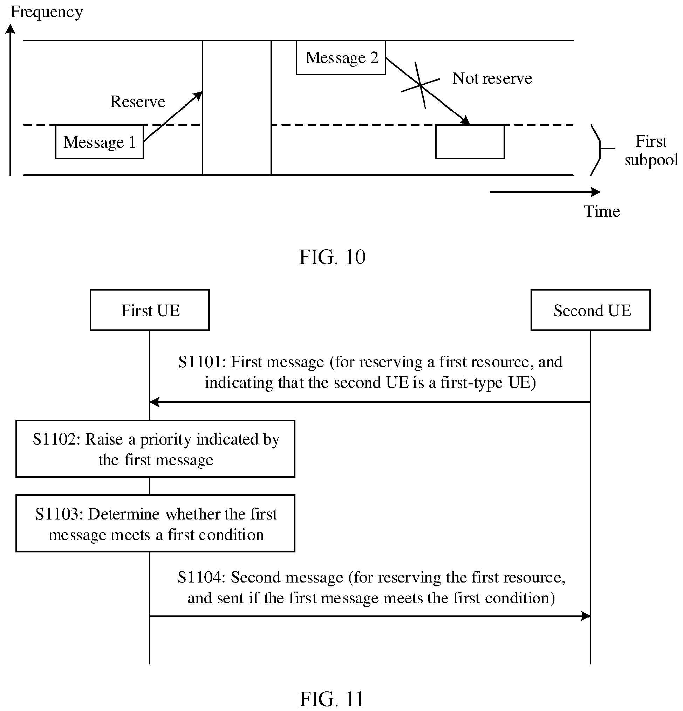

Therefore, according to embodiments of this application, all the N messages may be located in the first subpool, or all frequency domain positions of the N messages are located in the first subpool. Correspondingly, the method further includes S902: The second UE receives the N messages from the first UE. This may also be understood as that the resources in the first subpool cannot be reserved by using a message outside the first subpool. For example, if the first UE sends a message outside the first subpool, the message is not used to reserve a resource in the first subpool. For example, as shown in FIG. 10, a message 1 is located in the first subpool, and a message 2 is located outside the first subpool. Therefore, the message 1 may be used to reserve a resource in the first subpool (for example, in FIG. 10, the message 1 is used to reserve a resource in the first subpool and a resource outside the first subpool), and the message 2 cannot be used to reserve a resource in the first subpool, or a resource reserved by using the message 2 cannot include a resource in the first subpool. In this manner, the second UE can monitor the N messages, to learn of a reservation status of another UE for the resources in the first subpool. This reduces the probability of resource collision, and ensures effectiveness of the reservation mechanism.

Because the foregoing mechanism is strict and imposes a large limitation on the first UE, the condition may be appropriately relaxed. For example, it is specified that at least one of the N messages is located in the first subpool. Correspondingly, the second UE may receive the at least one message from the first UE. Once receiving the at least one message, the second UE can learn of the reservation status of the another UE for the resources in the first subpool. In this manner, a limitation on the first UE can be reduced, and implementation of the first UE can be simplified. For example, the at least one message may include a first message in the M messages in time domain. The first UE may not send the M messages at the same time. For example, the first UE may send a message first, and then send a next message after a period of time. The rest may be deduced by analogy. In this case, when the first UE sends a second message in the M messages in time domain, a part of a resource reserved by using the first message may have been occupied by the first UE, that is, the first UE may reserve a resource while using a resource. In this case, if the at least one message does not include the first message, before the second UE receives the at least one message, some resources in the first subpool may have been occupied by the first UE, but the second UE does not learn this. If the second UE has previously reserved these resources, resource collision may have occurred. Therefore, the at least one message may include the first message in the M messages in time domain, so that resource collision can be greatly reduced.

The message is, for example, SCI, for example, first-level SCI (SCI 1), or may be another message. The message may also have another name, for example, a "reservation message", and the name does not limit characteristics.

According to embodiments of this application, a message for reserving a resource in the first subpool is sent in the first subpool, so that the first-type UE can monitor the message. For example, when a receive end of the data sent by the first UE is a RedCap UE, or the first UE reserves a resource to send the data to the RedCap UE, the first UE needs to send, in a subpool of the RedCap UE, the data or the message for reserving a resource, so that the RedCap UE can monitor the data or the message. Therefore, the probability of resource collision can be reduced, and effectiveness of the reservation mechanism can be ensured to a great extent.

In the following, an embodiment of this application provides a fifth communication method. By using the method, a probability of resource collision can also be reduced. The method may continue to be applied to the scenario shown in FIG. 8. For example, in the following description, a first UE is the UE 1 in FIG. 8, and a second UE is the UE 2 in FIG. 8. FIG. 11 is a flowchart of the method.

S1101: The second UE sends a first message. Correspondingly, the first UE receives the first message from the second UE.

For content such as a type of the first UE, a type of the second UE, and subpools respectively used by the two UEs, refer to the description of the embodiment shown in FIG. 9.

The second UE may send the first message in a first subpool, and the first UE can monitor the first message.

The first message may be used to reserve a first resource, and the second UE reserves the first resource to send second data. Optionally, the first message further includes third indication information. The third indication information may indicate that a transmit end (namely, the second UE) of the first message (or the third indication information) is a first-type UE, for example, a RedCap UE; the third indication information may indicate a bandwidth supported by a transmit end of the first message (or the third indication information); or the third indication information may indicate a band supported by a transmit end of the first message (or the third indication information). In this way, the UE that receives the first message can learn of a capability of the second UE. When a non-first-type UE, for example, a non-RedCap UE, sends a message, the third indication information may not be included.

Alternatively, the third indication information may indicate that a transmit end (namely, the second UE) of the first message (or the third indication information) is not a first-type UE; the third indication information may indicate a bandwidth supported by a transmit end of the first message (or the third indication information); or the third indication information may indicate a band supported by a transmit end of the first message (or the third indication information). In this way, the UE that receives the first message can learn of a capability of the second UE. When a first-type UE, for example, a RedCap UE, sends a message, the third indication information may not be included.

It may be understood that the first message includes two fields, one of the two fields carries information for reserving a resource, and the other of the two fields carries the third indication information; or information for reserving a resource and the third indication information may be carried in a field included in the first message.

Optionally, if the first UE also needs to reserve the first resource, subsequent steps may continue to be performed. If the first UE does not reserve the first resource, subsequent steps may not need to be performed, and the first UE only needs to appropriately reserve a resource.

S 1102: The first UE raises a priority indicated by the first message.

The first message may indicate the priority. The priority may be a priority of the second data. For example, a manner in which the first message indicates the priority is as follows: The first message may carry priority information, and the priority information corresponds to the priority indicated by the first message. The priority information is, for example, a priority value. The value is, for example, any one of 1 to 8, or may be another value. The value is determined by the priority of the second data. The first UE obtains the priority value from the first message, to determine the priority indicated by the first message.

For example, a smaller priority value indicates a higher priority. In this case, the first UE may decrease the priority value, which is equivalent to raising the priority. For example, the priority value obtained by the first UE from the first message is 3, and the first UE may decrease the value to 2 or 1, which is equivalent to raising the priority of the second data. For another example, a larger priority value indicates a higher priority. In this case, the first UE may increase the priority value, which is equivalent to raising the priority. For example, the priority value obtained by the first UE from the first message is 3, and the first UE may increase the value to 4 or 5, which is equivalent to raising the priority of the second data.

In an optional implementation, when the first UE raises the priority, the priority may be raised based on a step value, and it is specified that the priority is raised by the step value each time. The step value is determined by the first UE, preconfigured in the first UE, specified in a protocol, or configured by a network device. For example, a smaller priority value indicates a higher priority. If the priority value obtained by the first UE from the first message is 3, and the step value is 1, the first UE may decrease the value to 2. If the priority indicated by the first message is already the highest priority and cannot be further raised, the first UE may not need to further raise the priority. That is, S1102 does not need to be performed.

Alternatively, in another optional implementation, a first priority is specified, and the first UE may raise the priority to the first priority. The first priority is, for example, determined by the first UE, preconfigured in the first UE, specified in a protocol, or configured by a network device. For example, if the priority value obtained by the first UE from the first message is 3, and the first priority is 1, the first UE may decrease the value to 1. In this case, if the priority indicated by the first message is already the first priority, or is already higher than the first priority, the first UE may not need to raise the priority. That is, S903 does not need to be performed.

S1103: The first UE determines whether the first message meets a first condition. If the first message meets the first condition, the first UE may preempt the first resource, or if the first message does not meet the first condition, the first UE cannot preempt the first resource.

In a first implementation of the first condition, the first condition includes that a priority of first data is higher than the raised priority. In this case, S1103 may be specifically: The first UE determines whether the priority of the first data is higher than the raised priority. If the priority of the first data is higher than the raised priority, it indicates that the first message meets the first condition; or if the priority of the first data is lower than the raised priority, it indicates that the first message does not meet the first condition. If the priority of the first data is equal to the raised priority, it may indicate that the first message meets the first condition, or it may indicate that the first message does not meet the first condition.

The first data is data to be sent by the first UE. For example, a smaller priority value indicates a higher priority. The priority indicated by the first message is originally 3, and the first UE decreases the priority to 2. The priority of the first data is 3. In this case, the priority of the first data is lower than the raised priority. For another example, a smaller priority value indicates a higher priority. The priority indicated by the first message is originally 3, and the first UE decreases the priority to 2. The priority of the first data is 1. In this case, the priority of the first data is higher than the raised priority.

In a second implementation of the first condition, the first condition includes that the raised priority meets a first threshold. In this case, S1103 may be specifically: The first UE determines whether the raised priority meets the first threshold. If the raised priority meets the first threshold, it indicates that the first message meets the first condition; or if the raised priority does not meet the first threshold, it indicates that the first message does not meet the first condition. The first threshold is, for example, the first priority. One priority meets the first threshold. For example, the priority is lower than or equal to the first threshold. One priority does not meet the first threshold. For example, the priority is higher than the first threshold. The first threshold is determined by the first UE, preconfigured in the first UE, specified in a protocol, or configured by the network device.

In a third implementation of the first condition, the first condition includes that signal strength of the first message is less than a first signal strength threshold. In this case, S1103 may be specifically: The first UE determines whether the signal strength of the first message is less than the first signal strength threshold. If the signal strength of the first message is less than the first signal strength threshold, it indicates that the first message meets the first condition; or if the signal strength of the first message is greater than or equal to the first signal strength threshold, it indicates that the first message does not meet the first condition. The first signal strength threshold is determined by the first UE, preconfigured in the first UE, specified in a protocol, or configured by the network device. For example, the first signal strength threshold is determined based on the raised priority and/or the priority of the first data. The first signal strength threshold includes, for example, a value of reference signal received power (reference signal received power, RSRP) and/or a value of reference signal receiving quality (reference signal receiving quality, RSRQ), or may further include a value of another parameter. If this implementation is used for the first condition, optionally, S1102 does not need to be performed. To be specific, the first UE does not need to raise the priority indicated by the first message, but only needs to determine whether the signal strength of the first message is less than the first signal strength threshold.

In other words, the first UE may compare the priority of the first data with the raised priority, may compare the first threshold with the raised priority, or may compare the signal strength of the first message with the first signal strength threshold. An implementation is flexible.

The foregoing three implementations of the first condition may be used independently, or any two or three of the foregoing three implementations may be applied in combination. For example, the first implementation of the first condition may be combined with the third implementation. In this case, the first condition includes that the priority of the first data is higher than the raised priority, and includes that the signal strength of the first message is less than the first signal strength threshold. In this case, S1103 may be specifically: The first UE determines whether the priority of the first data is higher than the raised priority, and determines whether the signal strength of the first message is less than the first signal strength threshold. If the priority of the first data is higher than the raised priority, and the signal strength of the first message is less than the first signal strength threshold, it indicates that the first message meets the first condition. If the priority of the first data is lower than or equal to the raised priority, and/or the signal strength of the first message is greater than or equal to the first signal strength threshold, it indicates that the first message does not meet the first condition. If the other two or three of the foregoing three implementations are combined, the combination manner is also similar.

S1104: When the first message meets the first condition, the first UE sends a second message in the first subpool. When the first message does not meet the first condition, the first UE skips sending a second message in the first subpool. For a case in which the first message meets the first condition and a case in which the first message does not meet the first condition, refer to the description of S1103.

Correspondingly, the second UE receives the second message from the first UE.

The first UE skips sending the second message, indicating that the first UE does not preempt the first resource.

The second message is, for example, sent in a broadcast manner. The second message is also used to reserve the first resource. In this case, the second message may be considered as a preemption message. In other words, the priority indicated by the first message is raised, so that it can be ensured to a great extent that the first-type UE uses a resource in the first subpool. However, if the first message does not meet the first condition, the non-first-type UE may preempt a resource in the first subpool, so that sending of data with a higher priority can be ensured to a great extent. In addition, the non-first-type UE also sends the preemption message in the first subpool, so that the first-type UE can monitor the preemption message. This reduces resource collision. If the first message does not meet the first condition, the first UE does not preempt the first resource. In this case, the first UE may continue to send a message to reserve a resource other than the first resource to send the first data, or the first UE may not reserve a resource and not send the first data.

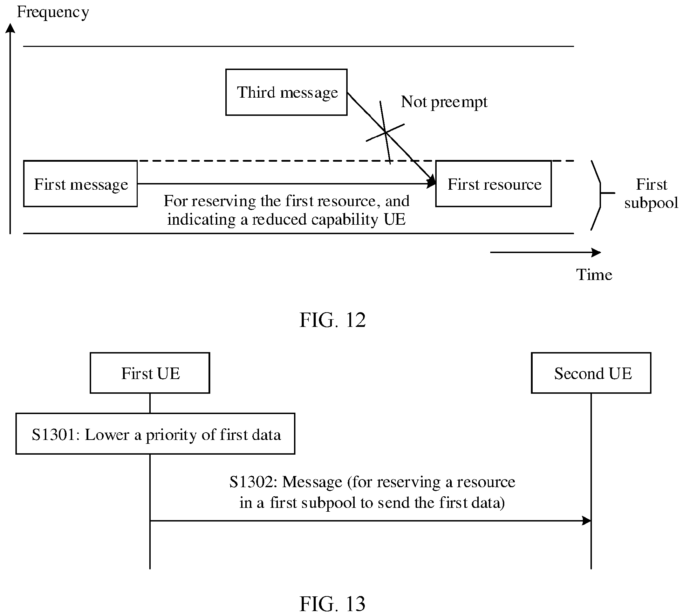

For example, as shown in FIG. 12, the first message is located in the first subpool and is sent by the second UE. The first message includes the third indication information, for example, indicating that the second UE is a RedCap UE. The first message is used to reserve the first resource. In addition, a third message further exists. The third message is also used to reserve the first resource, but the third message is sent outside the first subpool. Therefore, the third message cannot preempt the first resource.

According to the solutions provided in embodiments of this application, on the premise of ensuring to a great extent that the first-type UE uses the first subpool, resource utilization in the first subpool can be increased. In addition, the preemption message is sent in the first subpool, so that resource collision can also be reduced, and effectiveness of a reservation mechanism can be ensured.

In the following, an embodiment of this application provides a sixth communication method. By using the method, a probability of resource collision can also be reduced. The method may continue to be applied to the scenario shown in FIG. 8. For example, in the following description, a first UE is the UE 1 in FIG. 8, and a second UE is the UE 2 in FIG. 8. FIG. 13 is a flowchart of the method.

S1301: The first UE lowers a priority of first data.

For content such as a type of the first UE, a type of the second UE, and subpools respectively used by the two UEs, refer to the description of the embodiment shown in FIG. 9.

The first data is data to be sent by the first UE. The first UE needs to reserve a resource to send the first data. Before reserving the resource, the first UE may first lower the priority of the first data.

For example, the priority of the first data is represented by using a first priority value, and a physical layer of the first UE may obtain the first priority value from a higher layer (for example, a media access control (media access control, MAC) layer or an application layer) of the first UE. For example, a smaller priority value indicates a higher priority. In this case, the first UE may increase the first priority value, which is equivalent to lowering the priority. For example, the first priority value obtained by the first UE is 3, and the first UE may increase the value to 4 or 5, which is equivalent to lowering the priority of the first data. For another example, a larger priority value indicates a higher priority. In this case, the first UE may decrease the first priority value, which is equivalent to lowering the priority. For example, the first priority value obtained by the first UE is 3, and the first UE may decrease the value to 2 or 1, which is equivalent to lowering the priority of the first data. The first UE may lower the priority of the first data based on a step value or a specified priority. A difference from the embodiment shown in FIG. 11 lies in that the priority is raised in the embodiment shown in FIG. 11, the priority is lowered in embodiments of this application, but execution manners are similar. Therefore, reference may be made to the description of the embodiment shown in FIG. 11. The step value used in embodiments of this application may be the same as or different from the step value used in the embodiment shown in FIG. 11. The specified priority used in embodiments of this application may be the same as or different from the first priority used in the embodiment shown in FIG. 11.

S1302: The first UE sends a message in the first subpool. Correspondingly, the second UE receives the message from the first UE.

After lowering the priority of the first data, the first UE may reserve a resource in the first subpool to send the first data. For example, the resource reserved by using the message is a first resource. The message may include a second priority value. The second priority value is a priority value corresponding to the lowered priority. After receiving the message, the second UE may determine whether a priority of data (for example, second data) to be sent by the second UE is higher than the priority corresponding to the second priority value. If the priority of the second data is higher than the priority corresponding to the second priority value, the second UE may occupy the first resource; or if the priority of the second data is lower than or equal to the priority corresponding to the second priority value, the second UE may not occupy the first resource. This can reduce resource collision.

Alternatively, after receiving the message, the second UE may determine whether the priority corresponding to the second priority value meets a third threshold. If the priority corresponding to the second priority value meets the third threshold, it indicates that the second UE cannot occupy the first resource; or if the priority corresponding to the second priority value does not meet the third threshold, it indicates that the second UE can continue to occupy the first resource. The third threshold is, for example, a second priority. One priority meets the third threshold. For example, the priority is higher than the third threshold. One priority does not meet the third threshold. For example, the priority is lower than or equal to the third threshold. In other words, the second UE may compare the priority of the second data with the priority corresponding to the second priority value, or may compare the third threshold with the priority corresponding to the second priority value. The third threshold is determined by the second UE, preconfigured in the second UE, specified in a protocol, or configured by a network device.

Alternatively, after receiving the message, the second UE may determine whether signal strength of the message is greater than a second signal strength threshold. If the signal strength of the message is greater than the second signal strength threshold, it indicates that the second UE cannot occupy the first resource; or if the signal strength of the message is less than the second signal strength threshold, it indicates that the second UE can continue to occupy the first resource. If the signal strength of the message is equal to the second signal strength threshold, it may indicate that the second UE cannot occupy the first resource, or it indicates that the second UE can occupy the first resource. The second signal strength threshold is determined by the second UE, preconfigured in the second UE, specified in a protocol, or configured by the network device. For example, the second signal strength threshold is determined based on the second priority value and/or the priority of the second data.

In embodiments of this application, if a non-first-type UE needs to reserve a resource in the first subpool, a priority of data to be sent by the UE may be lowered, so that on the premise of ensuring to a great extent that the resource in the first subpool is available to the first-type UE, resource utilization in the first subpool is increased. In addition, the message for reserving the resource is sent in the first subpool, so that collision can also be reduced, and effectiveness of a reservation mechanism can be ensured.

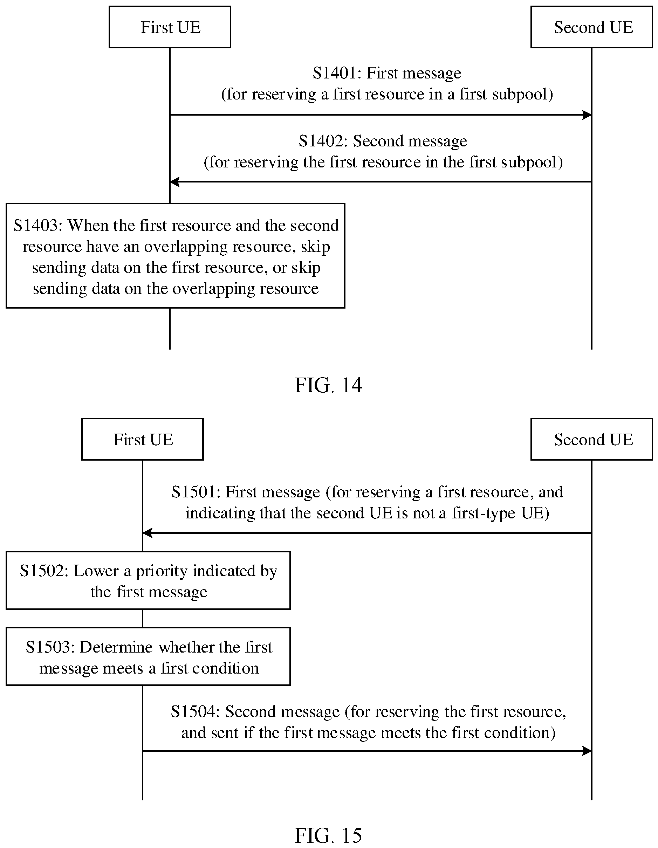

In the following, an embodiment of this application provides a seventh communication method. By using the method, a probability of resource collision can also be reduced. The method may continue to be applied to the scenario shown in FIG. 8. For example, in the following description, a first UE is the UE 1 in FIG. 8, and a second UE is the UE 2 in FIG. 8. FIG. 14 is a flowchart of the method.

S1401: The first UE sends a first message in a second subpool.

For content such as a type of the first UE, a type of the second UE, and subpools respectively used by the two UEs, refer to the description of the embodiment shown in FIG. 9.

For example, if the first UE needs to send first data, the first UE reserves a resource by using the first message. For example, the first message may be used to reserve a first resource. A frequency domain position of the first resource is located in a first subpool. In other words, the first resource is a resource in the first subpool.

Because the first message is sent in the second subpool, but is not sent in the first subpool, the second UE cannot monitor the first message.

S1402: The second UE sends a second message in the first subpool. Correspondingly, the first UE receives the second message from the second UE.

For example, if the second UE needs to send second data, the second UE reserves a resource by using the second message. For example, the second message is used to reserve a second resource. Because the second UE does not monitor the first message and does not learn that the first resource has been reserved by the first UE, the second UE considers that the first resource is available. Therefore, the first resource and the second resource reserved by using the second message may be a same resource, or the first resource and the second resource may have an intersection. Certainly, the first resource and the second resource may alternatively have no intersection. In other words, the first resource and the second resource are different resources. The second subpool includes the first subpool. Therefore, the second UE sends the second message in the first subpool, and the first UE can monitor the second message.

S 1403: When the first resource and the second resource have an overlapping resource, the first UE skips sending data on the first resource, or the first UE skips sending data on the overlapping resource between the first resource and the second resource. That the first resource and the second resource have an overlapping resource may also be understood as that the first resource and the second resource have an intersection. Correspondingly, the "overlapping resource" may also be referred to as an "intersection resource". It may be understood that the name does not constitute a limitation on characteristics.

If the first resource and the second resource are a same resource, or the first resource and the second resource have an intersection (in other words, the first resource and the second resource are not completely the same), the first UE may give up using the first resource, that is, skip sending data on the first resource, and the first resource is reserved for the second UE. In embodiments of this application, because the second UE does not learn that the first resource has been reserved by the first UE, the first UE may directly give up using the first resource without comparing a priority of the first data and a priority of the second data, so that the second UE can appropriately use the second resource. This reduces resource collision.

Alternatively, if the first resource and the second resource are a same resource, or the first resource and the second resource have an intersection, the first UE may determine whether a first priority is higher than a second priority, and if the first priority is higher than the second priority, the first UE gives up using the first resource, or if the first priority is lower than the second priority, the first UE continues to use the first resource. If the first priority is equal to the second priority, the first UE may give up using the first resource, or may continue to use the first resource. The second priority is a priority indicated by the second message. The first priority is lower than a priority indicated by the first message, or lower than a priority of the first data. In other words, the first priority is the lowered priority of the first data.

Alternatively, if the first resource and the second resource are a same resource, or the first resource and the second resource have an intersection, the first UE may determine whether a second priority is higher than a fourth threshold, and if the second priority is higher than the fourth threshold, the first UE gives up using the first resource, or if the second priority is lower than the fourth threshold, the first UE continues to use the first resource. The second priority is a priority indicated by the second message. The fourth threshold is, for example, configured by the first UE, configured by a network device, preconfigured in the first UE, or predefined in a protocol. The fourth threshold is, for example, lower than a priority of the first data.

According to a solution in a conventional technology, if the first UE determines that the second UE and the first UE reserve a same resource, the first UE needs to consider whether a data priority of the second UE is higher than a threshold or higher than a data priority of the first UE, before determining whether to give up the resource. However, in embodiments of this application, the first UE does not need to consider the priority, or the first UE may consider a lower priority (the fourth threshold lower than the data priority of the first UE, or that the data priority of the second UE is higher than "the lowered data priority of the first UE"). In this manner, a UE of another type other than the first type may use the first subpool when a first-type UE does not use the first subpool. This ensures a right of the first-type UE to use the first subpool.

Alternatively, if the first resource and the second resource have an intersection, the first UE may not send data on the intersection resource, but may send data on a third resource. The intersection resource is the intersection between the first resource and the second resource. For example, the first resource further includes another resource in addition to the intersection resource. The third resource is a resource other than the intersection resource in the first resource. In this case, the first UE may not send the data on the intersection resource, but may send the data on the third resource. Because the third resource and the second resource have no intersection, sending data by the first UE on the third resource does not affect the second UE. In addition, resource utilization can be increased, and a sending delay of the first data can be reduced.

The first UE skips sending the data on the first resource. For example, in an implementation, a physical layer of the first UE sends indication information to a higher layer (for example, a MAC layer or an application layer) of the first UE, where the indication information may indicate to exclude the first resource from an available resource. The higher layer of the first UE may exclude the first resource from the available resource based on the indication information. In this way, for the first UE, the first resource is an unavailable resource, and the first UE skips sending the data on the first resource. If the first UE skips sending the data on the intersection resource, a processing manner is also similar.

If the first resource and the second resource are different resources and have no intersection, the first UE may send the first data on the first resource.

According to the solutions provided in embodiments of this application, it can be ensured to a great extent that the first-type UE uses a resource in the first subpool, resource collision can be reduced, and effectiveness of a reservation mechanism can be improved.

In the following, an embodiment of this application provides an eighth communication method. By using the method, a probability of resource collision can also be reduced. The method may continue to be applied to the scenario shown in FIG. 8. For example, in the following description, a first UE is the UE 1 in FIG. 8, and a second UE is the UE 2 in FIG. 8. FIG. 15 is a flowchart of the method.

S1501: The second UE sends a first message. Correspondingly, the first UE receives the first message from the second UE.

The first UE is, for example, a first-type UE. The first UE is, for example, applicable to a first subpool. The second UE may be a first-type UE, or may be another type of UE, for example, a second-type UE. The second UE is, for example, applicable to a second subpool. For content such as the first type, the second type, the first subpool, and the second subpool, refer to the description of the embodiment shown in FIG. 9.

The second UE may send the first message in the first subpool, and the first UE can monitor the first message.

The first message may be used to reserve a first resource, and the second UE reserves the first resource to send second data. If the second UE is a first-type UE, optionally, the first message further includes third indication information. The third indication information may indicate that a transmit end (for example, the second UE) of the first message (or the third indication information) is a first-type UE, for example, a RedCap UE; the third indication information may indicate a bandwidth supported by a transmit end of the first message (or the third indication information); or the third indication information may indicate a band supported by a transmit end of the first message (or the third indication information). In this way, the UE that receives the first message can learn of a capability of the second UE. When a first-type UE sends a message, the third indication information may be included. When a non-first-type UE, for example, a non-RedCap UE, sends a message, the third indication information may not be included.

Alternatively, if the second UE is not a first-type UE, third indication information may indicate that a transmit end (namely, the second UE) of the first message (or the third indication information) is not a first-type UE; third indication information may indicate a bandwidth supported by a transmit end of the first message (or the third indication information); or third indication information may indicate a band supported by a transmit end of the first message (or the third indication information). In this way, the UE that receives the first message can learn of a capability of the second UE. When a first-type UE sends a message, the third indication information may be included. When a first-type UE, for example, a RedCap UE, sends a message, the third indication information may not be included. Alternatively, if the second UE is not a first-type UE, the first message may not carry third indication information. A receive end can determine, based on the fact that the first message does not carry the third indication information, that the second UE is not a first-type UE.

It may be understood that the first message includes two fields, one of the two fields carries information for reserving a resource, and the other of the two fields carries the third indication information; or information for reserving a resource and the third indication information may be carried in a field included in the first message.

Optionally, if the first UE also needs to reserve the first resource, subsequent steps may continue to be performed. If the first UE does not reserve the first resource, subsequent steps may not need to be performed, and the first UE only needs to appropriately reserve a resource.

S 1502: The first UE lowers a priority indicated by the first message. Optionally, if the first message does not carry the third indication information, or the third indication information carried in the first message indicates that the second UE is not a first-type UE (for example, if the third indication information indicates a type of the second UE, and the type is not the first type, it is considered that the third indication information indicates that the second UE is not a first-type UE), the first UE may perform S 1502. Otherwise, the first UE may not perform S 1502, but appropriately compare the priority of the first message with a priority of first data.

The first message may indicate the priority. The priority may be a priority of the second data. For example, a manner in which the first message indicates the priority is as follows: The first message may carry priority information, and the priority information corresponds to the priority indicated by the first message. The priority information is, for example, a priority value. The value is, for example, any one of 1 to 8, or may be another value. The value is determined by the priority of the second data. The first UE obtains the priority value from the first message, to determine the priority indicated by the first message.

For example, a smaller priority value indicates a higher priority. In this case, the first UE may increase the priority value, which is equivalent to lowering the priority. For example, the priority value obtained by the first UE from the first message is 3, and the first UE may increase the value to 4, 5, or the like, which is equivalent to lowering the priority of the second data. For another example, a smaller priority value indicates a higher priority. In this case, the first UE may decrease the priority value, which is equivalent to lowering the priority. For example, the priority value obtained by the first UE from the first message is 3, and the first UE may decrease the value to 1 or 2, which is equivalent to lowering the priority of the second data.

In an optional implementation, when the first UE lowers the priority, the priority may be lowered based on a step value, and it is specified that the priority is lowered by the step value each time. The step value is determined by the first UE, preconfigured in the first UE, specified in a protocol, or configured by a network device. For example, a smaller priority value indicates a higher priority. If the priority value obtained by the first UE from the first message is 3, and the step value is 1, the first UE may increase the value to 4. If the priority indicated by the first message is already the lowest priority and cannot be further lowered, the first UE may not need to further lower the priority. That is, S1502 does not need to be performed.

Alternatively, in another optional implementation, a first priority is specified, and the first UE may lower the priority to the first priority. The first priority is, for example, determined by the first UE, preconfigured in the first UE, specified in a protocol, or configured by the network device. For example, if the priority value obtained by the first UE from the first message is 1, and the first priority is 3, the first UE may increase the value to 3 (for example, a larger value indicates a lower priority). In this case, if the priority indicated by the first message is already the first priority, or is already lower than the first priority, the first UE does not need to lower the priority. That is, S1502 does not need to be performed.

S1503 : The first UE determines whether the first message meets a first condition. If the first message meets the first condition, the first UE may preempt the first resource, or if the first message does not meet the first condition, the first UE cannot preempt the first resource.

In a first implementation of the first condition, the first condition includes that the priority of the first data is higher than the lowered priority. In this case, S1503 may be specifically: The first UE determines whether the priority of the first data is higher than the lowered priority. If the priority of the first data is higher than the lowered priority, it indicates that the first message meets the first condition; or if the priority of the first data is lower than the lowered priority, it indicates that the first message does not meet the first condition. If the priority of the first data is equal to the lowered priority, it may indicate that the first message meets the first condition, or it may indicate that the first message does not meet the first condition.

The first data is data to be sent by the first UE. For example, a smaller priority value indicates a higher priority. The priority indicated by the first message is originally 3, and the first UE increases the priority to 4. The priority of the first data is 3. In this case, the priority of the first data is higher than the lowered priority. For another example, a smaller priority value indicates a higher priority. The priority indicated by the first message is originally 3, and the first UE increases the priority to 5. The priority of the first data is 6. In this case, the priority of the first data is lower than the lowered priority.

In a second implementation of the first condition, the first condition includes that the lowered priority meets a second threshold. In this case, S1103 may be specifically: The first UE determines whether the lowered priority meets the second threshold. If the lowered priority meets the second threshold, it indicates that the first message meets the first condition; or if the lowered priority does not meet the second threshold, it indicates that the first message does not meet the first condition. The second threshold is, for example, the first priority. One priority meets the second threshold. For example, the priority is lower than or equal to the second threshold. One priority does not meet the second threshold. For example, the priority is higher than the second threshold. The second threshold is determined by the first UE, preconfigured in the first UE, specified in a protocol, or configured by the network device.

In a third implementation of the first condition, the first condition includes that signal strength of the first message is less than a first signal strength threshold. In this case, S 1503 may be specifically: The first UE determines whether the signal strength of the first message is less than the first signal strength threshold. If the signal strength of the first message is less than the first signal strength threshold, it indicates that the first message meets the first condition; or if the signal strength of the first message is greater than or equal to the first signal strength threshold, it indicates that the first message does not meet the first condition. The first signal strength threshold is determined by the first UE, preconfigured in the first UE, specified in a protocol, or configured by the network device. For example, the first signal strength threshold is determined based on the raised priority and/or the priority of the first data. The first signal strength threshold includes, for example, a value of RSRP and/or a value of RSRQ, or may further include a value of another parameter. If this implementation is used for the first condition, optionally, S 1502 does not need to be performed. To be specific, the first UE does not need to raise the priority indicated by the first message, but only needs to determine whether the signal strength of the first message is less than the first signal strength threshold.

In other words, the first UE may compare the priority of the first data with the lowered priority, may compare the first threshold with the lowered priority, or may compare the signal strength of the first message with the first signal strength threshold. An implementation is flexible.

The foregoing three implementations of the first condition may be used independently, or any two or three of the foregoing three implementations may be applied in combination. For example, the first implementation of the first condition may be combined with the third implementation. In this case, the first condition includes that the priority of the first data is higher than the lowered priority, and includes that the signal strength of the first message is less than the first signal strength threshold. In this case, S 1503 may be specifically: The first UE determines whether the priority of the first data is higher than the lowered priority, and determines whether the signal strength of the first message is less than the first signal strength threshold. If the priority of the first data is higher than the lowered priority, and the signal strength of the first message is less than the first signal strength threshold, it indicates that the first message meets the first condition. If the priority of the first data is lower than or equal to the lowered priority, and/or the signal strength of the first message is greater than or equal to the first signal strength threshold, it indicates that the first message does not meet the first condition. If the other two or three of the foregoing three implementations are combined, the combination manner is also similar.

S1504: When the first message meets the first condition, the first UE sends a second message in the first subpool. When the first message does not meet the first condition, the first UE skips sending a second message in the first subpool. For a case in which the first message meets the first condition and a case in which the first message does not meet the first condition, refer to the description of S1503.

Correspondingly, the second UE receives the second message from the first UE. Optionally, the second message may carry third indication information, and the third indication information may indicate that a transmit end of the third indication information is a first-type UE. If the second message carries the third indication information, it may indicate that the first UE is a first-type UE.

The first UE skips sending the second message, indicating that the first UE does not preempt the first resource.

The second message is, for example, sent in a broadcast manner. The second message is also used to reserve the first resource. In this case, the second message may be considered as a preemption message. In other words, the priority indicated by the first message is lowered, so that it can be ensured to a great extent that the first-type UE uses a resource in the first subpool. However, if the first message does not meet the first condition, the non-first-type UE may preempt a resource in the first subpool, so that sending of data with a higher priority can be ensured to a great extent. In addition, the non-first-type UE also sends the preemption message in the first subpool, so that the first-type UE can monitor the preemption message. This reduces resource collision. If the first message does not meet the first condition, the first UE does not preempt the first resource. In this case, the first UE may continue to send a message to reserve a resource other than the first resource to send the first data, or the first UE may not reserve a resource and not send the first data.

Optionally, if the first UE is a second-type UE (for the description of the second type, refer to the foregoing embodiment), and a receive end of the data A is a third-type UE, the solution of any one of the embodiment shown in FIG. 9, the embodiment shown in FIG. 11, the embodiment shown in FIG. 13, or the embodiment shown in FIG. 14 may be performed. If the first UE is a second-type UE, and a receive end of the data A is a first-type UE (for the description of the first type, refer to the foregoing embodiment), one or more of the embodiment shown in FIG. 11, the embodiment shown in FIG. 13, or the embodiment shown in FIG. 14 does not need to be performed, and the first UE may appropriately reserve a resource and send the data A even in the first subpool. The third type is, for example, a non-bandwidth-limited type, for example, a partial sensing type, a full-sensing type, or a random resource selection type. The second type and the third type may be a same type. For example, both the second type and the third type are a full-sensing type. Alternatively, the second type and the third type may be different types. For example, the second type is a full-sensing type, and the third type is a partial-sensing type. The data A is data to be sent by the first UE on a resource reserved by the first UE (for example, the first data in the embodiment shown in FIG. 11, the embodiment shown in FIG. 13, or the embodiment shown in FIG. 14 and the data A are the same data). If the receive end of the data A is a first-type UE, the resource occupied by the first UE in the first subpool is used to send the data to the first-type UE. In this case, the resource reserved by the first UE is equivalent to being used by the first-type UE, and the first UE only needs to appropriately send the data.

Any one or more of the embodiment shown in FIG. 2, the embodiment shown in FIG. 5, the embodiment shown in FIG. 6, or the embodiment shown in FIG. 15 may be applied in combination. For example, the embodiment shown in FIG. 2, the embodiment shown in FIG. 5, the embodiment shown in FIG. 6, and the embodiment shown in FIG. 15 may be combined. For example, the first UE described in the foregoing embodiments is a same UE. Alternatively, the embodiment shown in FIG. 2, the embodiment shown in FIG. 5, the embodiment shown in FIG. 6, and the embodiment shown in FIG. 15 may not be combined, but are separately used as independent solutions.

Any one or more of the embodiment shown in FIG. 9, the embodiment shown in FIG. 11, the embodiment shown in FIG. 13, or the embodiment shown in FIG. 14 may be applied in combination. For example, the embodiment shown in FIG. 9, the embodiment shown in FIG. 11, the embodiment shown in FIG. 13, and the embodiment shown in FIG. 14 may be combined. For example, the first UE described in the foregoing embodiments is a same UE. Alternatively, the embodiment shown in FIG. 9, the embodiment shown in FIG. 11, the embodiment shown in FIG. 13, and the embodiment shown in FIG. 14 may not be combined, but are separately used as independent solutions.

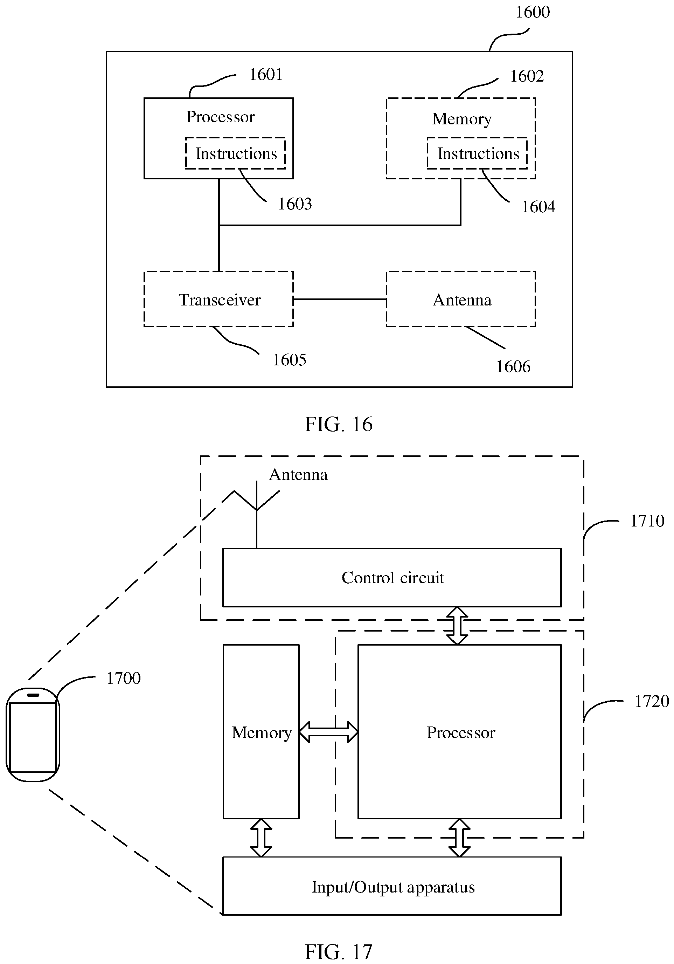

FIG. 16 is a schematic diagram of a structure of a communication apparatus 1600 according to an embodiment of this application. The communication apparatus 1600 may be the first UE in any one of the embodiment shown in FIG. 2, the embodiment shown in FIG. 5, the embodiment shown in FIG. 6, the embodiment shown in FIG. 9, the embodiment shown in FIG. 11, the embodiment shown in FIG. 13, the embodiment shown in FIG. 14, or the embodiment shown in FIG. 15, and is configured to implement the method performed by the first UE in the foregoing method embodiments. For a specific function, refer to the description in the method embodiments.

The communication apparatus 1600 includes one or more processors 1601. The processor 1601 may also be referred to as a processing unit, and may implement a specific control function. The processor 1601 may be a general-purpose processor, a dedicated processor, or the like. For example, the processor 1601 includes a baseband processor, a central processing unit, an application processor, a modem processor, a graphics processing unit, an image signal processor, a digital signal processor, a video codec processor, a controller, a memory, a neural-network processing unit, and/or the like. The baseband processor may be configured to process a communication protocol and communication data. The central processing unit may be configured to control the communication apparatus 1600, execute a software program, and/or process data. Different processors may be independent components, or may be integrated into one or more processors, for example, integrated into one or more application-specific integrated circuits.

Optionally, the communication apparatus 1600 includes one or more memories 1602 configured to store instructions 1604. The instructions 1604 may be run on the processor, so that the communication apparatus 1600 performs the method described in the foregoing method embodiments. Optionally, the memory 1602 may further store data. The processor and the memory may be separately disposed, or may be integrated together.

Optionally, the communication apparatus 1600 may store instructions 1603 (which may also be referred to as code or a program sometimes), and the instructions 1603 may be run on the processor, so that the communication apparatus 1600 performs the method described in the foregoing embodiments. The processor 1601 may store data.

Optionally, the communication apparatus 1600 may further include a transceiver 1605 and an antenna 1606. The transceiver 1605 may be referred to as a transceiver unit, a transceiver machine, a transceiver circuit, a transceiver, an input/output interface, or the like, and is configured to implement a transceiver function of the communication apparatus 1600 by using the antenna 1606.

Optionally, the communication apparatus 1600 may further include one or more of the following components: a wireless communication module, an audio module, an external memory interface, an internal memory, a universal serial bus (universal serial bus, USB) port, a power management module, an antenna, a speaker, a microphone, an input/output module, a sensor module, a motor, a camera, a display, or the like. It may be understood that, in some embodiments, the communication apparatus 1600 may include more or fewer components, or some components are integrated, or some components are split. These components may be implemented by hardware, software, or a combination of software and hardware.

The processor 1601 and the transceiver 1605 described in embodiments of this application may be implemented on an integrated circuit (integrated circuit, IC), an analog IC, a radio frequency integrated circuit (radio frequency integrated circuit, RFIC), a mixed signal IC, an application-specific integrated circuit (application-specific integrated circuit, ASIC), a printed circuit board (printed circuit board, PCB), an electronic device, or the like. The communication apparatus described in this specification may be an independent device (for example, an independent integrated circuit or a mobile phone), or may be a part of a large device (for example, a module that may be embedded in another device). For details, refer to the foregoing descriptions about the terminal device and the network device. Details are not described herein again.

An embodiment of this application provides a terminal device. The terminal device (referred to as a UE for ease of description) may be used in the foregoing embodiments. The terminal device includes corresponding means (means), units and/or circuits for implementing functions of the first UE in any one of the embodiment shown in FIG. 2, the embodiment shown in FIG. 5, the embodiment shown in FIG. 6, the embodiment shown in FIG. 9, the embodiment shown in FIG. 11, the embodiment shown in FIG. 13, the embodiment shown in FIG. 14, or the embodiment shown in FIG. 15 For example, the terminal device includes a transceiver module, configured to support the terminal device in implementing a transceiver function, and a processing module, configured to support the terminal device in processing a signal.

FIG. 17 is a schematic diagram of a structure of a terminal device according to an embodiment of this application.

The terminal device 1700 may be applicable to the architecture shown in FIG. 1, FIG. 4, or FIG. 8. For ease of description, FIG. 17 shows only main components of the terminal device 1700. As shown in FIG. 17, the terminal device 1700 includes a processor, a memory, a control circuit, an antenna, and an input/output apparatus. The processor is mainly configured to process a communication protocol and communication data, control the entire terminal device 1700, execute a software program, and process data of the software program. The memory is mainly configured to store a software program and data. The control circuit is mainly configured to implement conversion between a baseband signal and a radio frequency signal and process the radio frequency signal. The antenna is mainly configured to receive and send a radio frequency signal in a form of an electromagnetic wave. The input/output apparatus, for example, a touchscreen, a display, a microphone, or a keyboard, is mainly configured to receive data input by a user and output data to the user.

For example, the terminal device 1700 is a mobile phone. After the terminal device 1700 is powered on, the processor may read the software program in the storage unit, explain and execute instructions of the software program, and process data of the software program. When data needs to be sent in a wireless manner, the processor performs baseband processing on the to-be-sent data and then outputs a baseband signal to the control circuit. The control circuit performs radio frequency processing on the baseband signal and then sends a radio frequency signal in a form of an electromagnetic wave by using the antenna. When data is sent to the terminal device 1700, the control circuit receives a radio frequency signal by using the antenna, converts the radio frequency signal into a baseband signal, and outputs the baseband signal to the processor. The processor converts the baseband signal into data, and processes the data.

A person skilled in the art may understand that for ease of description, FIG. 17 shows only one memory and one processor. In some embodiments, the terminal device 1700 may include a plurality of processors and memories. The memory may also be referred to as a storage medium, a storage device, or the like. This is not limited in embodiments of the present invention.

In an optional implementation, the processor may include a baseband processor and a central processing unit. The baseband processor is mainly configured to process a communication protocol and communication data. The central processing unit is mainly configured to control the entire terminal device 1700, execute a software program, and process data of the software program. The processor in FIG. 17 integrates functions of the baseband processor and the central processing unit. A person skilled in the art may understand that the baseband processor and the central processing unit may alternatively be processors independent of each other, and are interconnected by using a technology, for example, through a bus. The terminal device 1700 may include a plurality of baseband processors to adapt to different network standards, the terminal device 1700 may include a plurality of central processing units to enhance a processing capability of the terminal device, and components of the terminal device 1700 may be connected through various buses. The baseband processor may also be expressed as a baseband processing circuit or a baseband processing chip. The central processing unit may also be expressed as a central processing circuit or a central processing chip. A function of processing the communication protocol and the communication data may be embedded in the processor, or may be stored in a storage unit in a form of the software program. The processor executes the software program to implement a baseband processing function.

In an example, the antenna and the control circuit that have a transceiver function may be considered as a transceiver unit 1710 of the terminal device 1700, and the processor having a processing function may be considered as a processing unit 1720 of the terminal device 1700. As shown in FIG. 17, the terminal device 1700 includes the transceiver unit 1710 and the processing unit 1720. The transceiver unit may also be referred to as a transceiver, a transceiver machine, a transceiver apparatus, or the like. Optionally, a component that is in the transceiver unit 1710 and that is configured to implement a receiving function may be considered as a receiving unit, and a component that is in the transceiver unit 1710 and that is configured to implement a sending function may be considered as a sending unit. In other words, the transceiver unit 1710 includes the receiving unit and the sending unit. For example, the receiving unit may also be referred to as a receiver machine, a receiver, a receiver circuit, or the like, and the sending unit may be referred to as a transmitter machine, a transmitter, a transmitter circuit, or the like.

A person of ordinary skill in the art may be aware that, in combination with the examples described in embodiments disclosed in this specification, units and methods may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in another manner. For example, the described apparatus embodiment is merely an example. For example, division into units is merely logical function division. Units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, a network device, or the like) to perform all or some of the steps of the methods described in embodiments of this application. The computer-readable storage medium may be any usable medium that can be accessed by a computer. For example, the computer-readable medium may include but is not limited to: a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, another optical disc memory, a magnetic disk storage medium, or another magnetic storage device, or any other medium that can be used to carry or store expected program code in a form of an instruction or a data structure and that can be accessed by a computer. In addition, by way of example but not limitative description, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

Embodiment 1. A communication method, applied to a first terminal device, where the first terminal device is a first-type terminal device, and the method includes:
determining first information, where the first information indicates a reference frequency domain position of a first resource pool, the first resource pool is a resource pool configured for the first-type terminal device, and the reference frequency domain position includes one or more of a start frequency domain position, an end frequency domain position, or an intermediate frequency domain position of the first resource pool; and
determining a frequency domain range of the first resource pool based on the reference frequency domain position and second information, where the second information includes one or more of the following: a bandwidth supported by the first-type terminal device, a bandwidth of one subchannel, or a quantity of subchannels occupied by the first resource pool.

Embodiment 2. The method according to Embodiment 1, where
the reference frequency domain position is a frequency domain position of a subchannel on which a sidelink synchronization signal is located;
the reference frequency domain position is a frequency domain position of a lowest-frequency subcarrier on which a sidelink synchronization signal is located;
the reference frequency domain position is a frequency domain position of a highest-frequency subcarrier on which a sidelink synchronization signal is located; or
the reference frequency domain position is a frequency domain position of a first subcarrier occupied by a sidelink synchronization signal.

Embodiment 3. The method according to Embodiment 2, where the first subcarrier is a 66^{th} or 67^{th} subcarrier.

Embodiment 4. The method according to any one of Embodiments 1 to 3, where the frequency domain range of the first resource pool includes a frequency domain position of the sidelink synchronization signal.

Embodiment 5. The method according to any one of Embodiments 1 to 4, where the determining first information includes:
receiving the first information from a network device, where the first information further includes first indication information, and the first indication information indicates that the first resource pool is applicable to the first-type terminal device.

Embodiment 6. The method according to any one of Embodiments 1 to 5, where a bandwidth of the first resource pool is less than or equal to the bandwidth supported by the first-type terminal device.

Embodiment 7. The method according to any one of Embodiments 1 to 6, where the first-type terminal device is a bandwidth-limited terminal device.

Embodiment 8. A communication method, applied to a first terminal device, where the method includes:
sending a first request message to the network device, where the first request message is used to request a resource, the resource is used to send data to a second terminal device, the first request message includes second indication information, and the second indication information indicates that the first terminal device or the second terminal device or both are a first-type terminal device, indicates a band supported by the first terminal device and/or the second terminal device, or indicates a bandwidth supported by the first terminal device and/or the second terminal device, or the second indication information includes an identifier or an index of the second terminal device; and
receiving a first response message from the network device, where the first response message indicates a first resource.

Embodiment 9. The method according to Embodiment 8, where the second indication information includes the identifier or the index of the second terminal device, and indicates that the second terminal device is the first-type terminal device.

Embodiment 10. The method according to Embodiment 8 or 9, where the first-type terminal device is a reduced capability terminal device.

Embodiment 11. The method according to any one of Embodiments 8 to 10, where
the second indication information includes the identifier or the index of the second terminal device, the method further includes: sending third information to the network device, the third information includes information of at least one receiving terminal device of the first terminal device, the at least one receiving terminal device includes the second terminal device, information that is of one receiving terminal device and that is included in the third information includes an identifier of the receiving terminal device and an index corresponding to the identifier, or information that is of one receiving terminal device and that is included in the third information includes an index of the receiving terminal device and capability information of the receiving terminal device, the index of the receiving terminal device is used by the network device to determine a capability of the receiving terminal device, and the capability of the receiving terminal device indicates whether the receiving terminal device is the first-type terminal device.

Embodiment 12. The terminal device according to any one of Embodiments 8 to 11, where the method further includes:
sending capability information of the first terminal device to the network device, where the capability information of the first terminal device is used to determine whether the first terminal device is the first-type terminal device.

Embodiment 13. The terminal device according to any one of Embodiments 8 to 12, where a frequency domain position of the first resource is located in a band supported by the second terminal device.

Embodiment 14. A communication method, applied to a first terminal device, where the method includes:
sending M messages, where resources reserved by using N messages in the M messages are located in a first resource pool, a frequency domain position of at least one message in the N messages is located in the first resource pool, the first resource pool is a resource pool configured for a first-type terminal device, both M and N are positive integers, and N is less than or equal to M.

Embodiment 15. The method according to Embodiment 14, where the at least one message includes a first message in the M messages in time domain.

Embodiment 16. The method according to Embodiment 14 or 15, where frequency domain positions of the N messages are all located in the first resource pool.

Embodiment 17. A communication method, applied to a first terminal device, where the method includes:
sending a message, where the message is used to reserve a resource, a frequency domain position of the message is located outside a first resource pool, the first resource pool is a resource pool configured for a first-type terminal device, and the resource reserved by using the message does not include a resource in the first resource pool.

Embodiment 18. A communication method, applied to a first terminal device, where the method includes:
receiving a first message from a second terminal device, where the first message is used to reserve a first resource, the first message includes third indication information, and the third indication information indicates that the second terminal device is a first-type terminal device;
raising a priority indicated by the first message;
determining that a priority of first data is higher than the raised priority, or determining that the raised priority meets a first threshold, where the first data is data to be sent on the first resource reserved by using a second message; and
sending the second message in a first resource pool, where the second message is used to reserve the first resource, and the first resource pool is a resource pool configured for the first-type terminal device.

Embodiment 19. The method according to Embodiment 18, where the first terminal device is a second-type terminal device.

Embodiment 20. A communication method, applied to a first terminal device, where the method includes:
lowering a priority of first data; and
sending a message, where the message is used to reserve a resource for the first data, a frequency domain position of the resource is located in a first resource pool, the first terminal device is a second-type terminal device, and the first resource pool is a resource pool configured for a first-type terminal device.

Embodiment 21. A communication method, applied to a first terminal device, where the method includes:
sending a first message, where the first message is used to reserve a first resource, a frequency domain position of the first resource is located in a first resource pool, the first terminal device is a second-type terminal device, and the first resource pool is a resource pool configured for a first-type terminal device;
receiving a second message from a second terminal device, where the second message is used to reserve a second resource, the second message includes third indication information, and the third indication information indicates that the second terminal device is the first-type terminal device; and
if the first resource and the second resource have an intersection, skipping sending data on an intersection resource of the first resource and the second resource, or skipping sending data on the first resource.

Embodiment 22. The method according to Embodiment 21, where the skipping sending data on the first resource includes:
excluding the first resource from a candidate resource, where the candidate resource is used to send data.

Embodiment 23. The method according to Embodiment 21 or 22, where a second resource pool and the first resource pool have an intersection, and the second resource pool is a resource pool used by the first terminal device.

Embodiment 24. A communication apparatus, including a processing unit, where the processing unit is configured to:
determine first information, where the first information indicates a reference frequency domain position of a first resource pool, the first resource pool is a resource pool configured for a first-type terminal device, and the reference frequency domain position includes one or more of a start frequency domain position, an end frequency domain position, or an intermediate frequency domain position of the first resource pool; and
determine a frequency domain range of the first resource pool based on the reference frequency domain position and second information, where the second information includes one or more of the following: a bandwidth supported by the first-type terminal device, a bandwidth of one subchannel, or a quantity of subchannels occupied by the first resource pool.

Embodiment 25. The communication apparatus according to Embodiment 24, where
the reference frequency domain position is a frequency domain position of a subchannel on which a sidelink synchronization signal is located;
the reference frequency domain position is a frequency domain position of a lowest-frequency subcarrier on which a sidelink synchronization signal is located;
the reference frequency domain position is a frequency domain position of a highest-frequency subcarrier on which a sidelink synchronization signal is located; or
the reference frequency domain position is a frequency domain position of a first subcarrier occupied by a sidelink synchronization signal.

Embodiment 26. The communication apparatus according to Embodiment 25, where the first subcarrier is a 66^{th} or 67^{th} subcarrier.

Embodiment 27. The communication apparatus according to any one of Embodiments 24 to 26, where the frequency domain range of the first resource pool includes a frequency domain position of the sidelink synchronization signal.

Embodiment 28. The communication apparatus according to any one of Embodiments 24 to 27, where the communication apparatus further includes a transceiver unit, and the processing unit is configured to determine the first information in the following manner:
receiving the first information from a network device by using the transceiver unit, where the first information further includes first indication information, and the first indication information indicates that the first resource pool is applicable to the first-type terminal device.

Embodiment 29. The communication apparatus according to any one of Embodiments 24 to 28, where a bandwidth of the first resource pool is less than or equal to the bandwidth supported by the first-type terminal device.

Embodiment 30. The communication apparatus according to any one of Embodiments 24 to 29, where the first-type terminal device is a bandwidth-limited terminal device.

Embodiment 31. A communication apparatus, including a transceiver unit, where the transceiver unit is configured to:
send a first request message to a network device, where the first request message is used to request a resource, the resource is used to send data to a second terminal device, the first request message includes second indication information, and the second indication information indicates that the communication apparatus or the second terminal device or both are a first-type terminal device, indicates a band supported by the communication apparatus and/or the second terminal device, or indicates a bandwidth supported by the communication apparatus and/or the second terminal device, or the second indication information includes an identifier or an index of the second terminal device; and
receive a first response message from the network device, where the first response message indicates a first resource.

Embodiment 32. The communication apparatus according to Embodiment 31, where the second indication information includes the identifier or the index of the second terminal device, and indicates that the second terminal device is the first-type terminal device.

Embodiment 33. The communication apparatus according to Embodiment 31 or 32, where the first-type terminal device is a reduced capability terminal device.

Embodiment 34. The communication apparatus according to any one of Embodiments 31 to 33, where
the second indication information includes the identifier or the index of the second terminal device, the method further includes: sending third information to the network device, the third information includes information of at least one receiving terminal device of the communication apparatus, the at least one receiving terminal device includes the second terminal device, information that is of one receiving terminal device and that is included in the third information includes an identifier of the receiving terminal device and an index corresponding to the identifier, or information that is of one receiving terminal device and that is included in the third information includes an index of the receiving terminal device and capability information of the receiving terminal device, the index of the receiving terminal device is used by the network device to determine a capability of the receiving terminal device, and the capability of the receiving terminal device indicates whether the receiving terminal device is the first-type terminal device.

Embodiment 35. The terminal device according to any one of Embodiments 31 to 34, where the transceiver unit is further configured to send capability information of the communication apparatus to the network device, and the capability information of the communication apparatus is used to determine whether the communication apparatus is the first-type terminal device.

Embodiment 36. The terminal device according to any one of Embodiments 31 to 35, where a frequency domain position of the first resource is located in a band supported by the second terminal device.

Embodiment 37. A communication apparatus, including a transceiver unit, configured to send M messages, where resources reserved by using N messages in the M messages are located in a first resource pool, a frequency domain position of at least one message in the N messages is located in the first resource pool, the first resource pool is a resource pool configured for a first-type terminal device, both M and N are positive integers, and N is less than or equal to M.

Embodiment 38. The communication apparatus according to Embodiment 37, where the at least one message includes a first message in the M messages in time domain.

Embodiment 39. The communication apparatus according to Embodiment 14 or 15, where frequency domain positions of the N messages are all located in the first resource pool.

Embodiment 40. A communication apparatus, including a transceiver unit, configured to send a message, where the message is used to reserve a resource, a frequency domain position of the message is located outside a first resource pool, the first resource pool is a resource pool configured for a first-type terminal device, and the resource reserved by using the message does not include a resource in the first resource pool.

Embodiment 41. A communication apparatus, including a transceiver unit and a processing unit, where
the transceiver unit is configured to receive a first message from a second terminal device, where the first message is used to reserve a first resource, the first message includes third indication information, and the third indication information indicates that the second terminal device is a first-type terminal device;
the processing unit is configured to raise a priority indicated by the first message;
the processing unit is further configured to determine that a priority of first data is higher than the raised priority, or determine that the raised priority meets a first threshold, where the first data is data to be sent on the first resource reserved by using a second message; and
the transceiver unit is further configured to send the second message in a first resource pool, where the second message is used to reserve the first resource, and the first resource pool is a resource pool configured for the first-type terminal device.

Embodiment 42. The communication apparatus according to Embodiment 41, where the communication apparatus is a second-type communication apparatus.

Embodiment 43. A communication apparatus, including a transceiver unit and a processing unit, where
the processing unit is configured to lower a priority of first data; and
the transceiver unit is configured to send a message, where the message is used to reserve a resource for the first data, a frequency domain position of the resource is located in a first resource pool, the communication apparatus is a second-type communication apparatus, and the first resource pool is a resource pool configured for a first-type terminal device.

Embodiment 44. A communication apparatus, including a transceiver unit and a processing unit, where
the transceiver unit is configured to send a first message, where the first message is used to reserve a first resource, a frequency domain position of the first resource is located in a first resource pool, the communication apparatus is a second-type communication apparatus, and the first resource pool is a resource pool configured for a first-type terminal device;
the transceiver unit is further configured to receive a second message from a second terminal device, where the second message is used to reserve a second resource, the second message includes third indication information, and the third indication information indicates that the second terminal device is the first-type terminal device; and
the processing unit is configured to: if it is determined that the first resource and the second resource have an intersection, skip sending data on an intersection resource of the first resource and the second resource, or skip sending data on the first resource.

Embodiment 45. The communication apparatus according to Embodiment 44, where the processing unit is configured to skip sending data on the first resource in the following manner:
excluding the first resource from a candidate resource, where the candidate resource is used to send data.

Embodiment 46. The communication apparatus according to Embodiment 44 or 45, where a second resource pool and the first resource pool have an intersection, and the second resource pool is a resource pool used by the communication apparatus.

Embodiment 47. A communication method, applied to a first terminal device, where the method includes:
receiving a first message from a second terminal device, where the first message is used to reserve a first resource;
if the first message does not include third indication information, lowering a priority indicated by the first message, where the third indication information indicates that a transmit end of the third indication information is a first-type terminal device;
determining that a priority of first data is higher than the lowered priority, or determining that the lowered priority meets a second threshold, where the first data is to-be-sent data; and
sending a second message in the first resource pool, where the second message is used to reserve the first resource.

Embodiment 48. The method according to Embodiment 47, where the second message further includes the third indication information.

Embodiment 49. The method according to Embodiment 47 or 48, where the first terminal device is the first-type terminal device.

Embodiment 50. The method according to any one of Embodiments 47 to 49, where the first-type terminal device is a bandwidth-limited terminal device.

Embodiment 51. A communication apparatus, including a transceiver unit and a processing unit, where
the transceiver unit is configured to receive a first message from a second terminal device, where the first message is used to reserve a first resource;
the processing unit is configured to: if the first message does not include third indication information, lower a priority indicated by the first message, where the third indication information indicates that a transmit end of the third indication information is a first-type terminal device;
the processing unit is further configured to determine that a priority of first data is higher than the lowered priority, or determine that the lowered priority meets a second threshold, where the first data is to-be-sent data; and
the transceiver unit is further configured to send a second message in the first resource pool, where the second message is used to reserve the first resource.

Embodiment 52. The communication apparatus according to Embodiment 51, where the second message further includes the third indication information.

Embodiment 53. The communication apparatus according to Embodiment 51 or 52, where the communication apparatus is a first-type communication apparatus.

Embodiment 54. The communication apparatus according to any one of Embodiments 51 to 53, where the first-type communication apparatus is a bandwidth-limited communication apparatus.

Embodiment 55: An apparatus, including units for performing the method described in any one of embodiments of this application.

Embodiment 56. A computer program product, where the computer program product includes a computer program, and when the computer program is run on a computer, the computer is enabled to perform the method according to any one of Embodiments 1 to 7, the computer is enabled to perform the method according to any one of Embodiments 8 to 13, the computer is enabled to perform the method according to any one of Embodiments 14 to 16, the computer is enabled to perform the method according to Embodiment 17, the computer is enabled to perform the method according to Embodiment 18 or 19, the computer is enabled to perform the method according to Embodiment 20, the computer is enabled to perform the method according to any one of Embodiments 21 to 23, or the computer is enabled to perform the method according to any one of Embodiments 47 to 50.

## Claims

1. A communication method, applied to a first terminal device, wherein the first terminal device is a first-type terminal device, and the method comprises:
determining first information, wherein the first information indicates a reference frequency domain position of a first resource pool, the first resource pool is a resource pool configured for the first-type terminal device, and the reference frequency domain position comprises one or more of a start frequency domain position, an end frequency domain position, or an intermediate frequency domain position of the first resource pool; and
determining a frequency domain range of the first resource pool based on the reference frequency domain position and second information, wherein the second information comprises one or more of a bandwidth supported by the first-type terminal device, a bandwidth of one subchannel, or a quantity of subchannels occupied by the first resource pool.

2. The method according to claim 1, wherein
the reference frequency domain position is a frequency domain position of a subchannel on which a sidelink synchronization signal is located;
the reference frequency domain position is a frequency domain position of a lowest-frequency subcarrier on which a sidelink synchronization signal is located;
the reference frequency domain position is a frequency domain position of a highest-frequency subcarrier on which a sidelink synchronization signal is located; or
the reference frequency domain position is a frequency domain position of a first subcarrier occupied by a sidelink synchronization signal.

3. The method according to claim 2, wherein the first subcarrier is a 66^{th} or 67^{th} subcarrier.

4. The method according to any one of claims 1 to 3, wherein the frequency domain range of the first resource pool comprises a frequency domain position of the sidelink synchronization signal.

5. The method according to any one of claims 1 to 4, wherein the determining first information comprises:
receiving the first information from a network device, wherein the first information further comprises first indication information, and the first indication information indicates that the first resource pool is applicable to the first-type terminal device.

6. The method according to any one of claims 1 to 5, wherein a bandwidth of the first resource pool is less than or equal to the bandwidth supported by the first-type terminal device.

7. The method according to any one of claims 1 to 6, wherein the first-type terminal device is a bandwidth-limited terminal device.

8. The method according to any one of claims 1 to 7, wherein the method further comprises:
sending a first request message to the network device, wherein the first request message is used to request a resource, the resource is used to send data to a second terminal device, the first request message comprises second indication information, and the second indication information indicates that the first terminal device or the second terminal device or both are a first-type terminal device, indicates a band supported by the first terminal device and/or the second terminal device, or indicates a bandwidth supported by the first terminal device and/or the second terminal device, or the second indication information comprises an identifier or an index of the second terminal device; and
receiving a first response message from the network device, wherein the first response message indicates a first resource.

9. The method according to claim 8, wherein the second indication information comprises the identifier or the index of the second terminal device, and indicates that the second terminal device is the first-type terminal device.

10. The method according to claim 8 or 9, wherein
the second indication information comprises the identifier or the index of the second terminal device, and the method further comprises: sending third information to the network device, wherein the third information comprises information of at least one receiving terminal device of the first terminal device, the at least one receiving terminal device comprises the second terminal device, information that is of one receiving terminal device and that is comprised in the third information comprises an identifier of the receiving terminal device and an index corresponding to the identifier, or information that is of one receiving terminal device and that is comprised in the third information comprises an index of the receiving terminal device and capability information of the receiving terminal device, the index of the receiving terminal device is used by the network device to determine a capability of the receiving terminal device, and the capability of the receiving terminal device indicates whether the receiving terminal device is the first-type terminal device.

11. The terminal device according to any one of claims 8 to 10, wherein the method further comprises:
sending capability information of the first terminal device to the network device, wherein the capability information of the first terminal device is used to determine whether the first terminal device is the first-type terminal device.

12. The terminal device according to any one of claims 8 to 11, wherein a frequency domain position of the first resource is located in a band supported by the second terminal device.

13. The method according to any one of claims 1 to 7, wherein the method further comprises:
receiving a first message from a second terminal device, wherein the first message is used to reserve a first resource;
if the first message does not comprise third indication information, lowering a priority indicated by the first message, wherein the third indication information indicates that a transmit end of the third indication information is a first-type terminal device;
determining that a priority of first data is higher than the lowered priority, or determining that the lowered priority meets a second threshold, wherein the first data is to-be-sent data; and
sending a second message in the first resource pool, wherein the second message is used to reserve the first resource.

14. The method according to claim 13, wherein the second message further comprises the third indication information.

15. A communication device, comprising:
one or more processors;
one or more memories; and
one or more computer programs, wherein the one or more computer programs are stored in the one or more memories, the one or more computer programs comprise instructions, and when the instructions are executed by the one or more processors of the communication device, the communication device is enabled to perform the method according to any one of claims 1 to 14.

16. A computer-readable storage medium, wherein the computer-readable storage medium is configured to store a computer program, and when the computer program is run on a computer, the computer is enabled to perform the method according to any one of claims 1 to 14.

17. A chip, comprising one or more processors and a communication interface, wherein the one or more processors are configured to read instructions to perform the method according to any one of claims 1 to 14.
